# EUROPÄISCHE PATENTSCHRIFT

(11) **EP 3 587 836 B1**
(45) Veröffentlichungstag und Bekanntmachung des Hinweises auf die Patenterteilung: **17.02.2021**
(21) Anmeldenummer: 19175200.5
(22) Anmeldetag: 17.05.2019
(51) Int. Cl.: F16B 13/00, F16B 13/06, F16B 13/12

(54) **DÜBEL MIT FLEXIBEL GELAGERTER MITDREHSICHERUNG**
DOWEL WITH FLEXIBLY MOUNTED TWISTING DEVICE
GOUJON À DISPOSITIF ANTI-ROTATION MONTÉ DE FAÇON FLEXIBLE

(30) Priorität: 29.06.2018 DE 102018115861; 29.06.2018 DE 102018115862; 25.01.2019 DE 202019100436 U
(43) Veröffentlichungstag der Anmeldung: 01.01.2020
(73) Patentinhaber: Adolf Würth GmbH & Co. KG, 74653 Künzelsau (DE); Würth International AG, 7000 Chur (CH)
(72) Erfinder: Wieland, Achim, 74211 Leingarten (DE)
(74) Vertreter: Dilg, Haeusler, Schindelmann Patentanwaltsgesellschaft mbH

(56) Entgegenhaltungen:
- DE-A1- 2 753 519
- DE-A1- 3 226 017

## Beschreibung

Die Erfindung betrifft einen Dübel, ein Montagekit, ein Verfahren zum Herstellen eines Dübels und ein Verfahren zum Montieren eines Dübels in einem Untergrund.

Ein Dübel ist ein in der Verbindungstechnik gebrauchtes Bauteil. Er wird bei Werkstoffen angewendet, in die sich eine Schraube nicht unmittelbar eindrehen lässt. Dübel werden in ein zylindrisches Loch in gemauerte, betonierte oder mit Platten versehene Wände, Decken oder Böden als Zwischenteil eingesetzt. Beim Eindrehen der Schraube spreizt sich der Dübel. Durch Kraftschluss zwischen Dübel und umgebendem Material und manchmal mit Formschluss ist die Schraube gegen Herausziehen gesichert.

DE 10 2013 107075 A1 und DE 10 2013 107079 A1 offenbaren Dübel aus zwei Kunststoffen.

AU 2015202908 B2 offenbart eine Verankerungseinrichtung mit Zähnen als Verdrehschutz bei Eindrehen einer Schraube.

DE 27 53 519 offenbart einen Dübel, der eine erste Komponente mit einer elastisch gelagerten Mitdrehsicherung, eine an der ersten Komponente angeordnete zweite Komponente und eine Öffnung zum Einführen eines Befestigungselements aufweist, wobei die erste Komponente Spreizstege bildet.

Wenngleich herkömmliche Dübel für verschiedene Anwendungen sehr leistungsstark sind, kann die Handhabung eines Dübels beim Setzen in einen Untergrund für einen Benutzer mühsam sein. Zum Beispiel kann eine Verdrehsicherung am Dübel beim Einschlagen des Dübels in ein Bohrloch in einem Untergrund mittels eines Hammers brechen oder ein Absplittern des Untergrunds zur Folge haben.

Es ist eine Aufgabe der vorliegenden Erfindung, einen Dübel bereitzustellen, der in einen Untergrund mit hoher Benutzerfreundlichkeit gesetzt werden kann, ohne Dübel und Untergrund zu beschädigen.

Diese Aufgabe wird durch die Gegenstände gemäß den unabhängigen Ansprüchen gelöst. Bevorzugte Ausgestaltungen ergeben sich aus den abhängigen Ansprüchen.

Gemäß einem Ausführungsbeispiel der vorliegenden Erfindung ist ein Dübel geschaffen, der eine erste Komponente mit einer elastisch (insbesondere federnd) gelagerten Mitdrehsicherung, eine an der ersten Komponente angeordnete zweite Komponente, und eine Öffnung zum Einführen eines Befestigungselements aufweist, wobei mindestens eine der Komponenten Spreizstege bildet. Die zweite Komponente weist ein Fenster auf, welches die Mitdrehsicherung nach außen hin freilegt.

Gemäß einem anderen Ausführungsbeispiel der vorliegenden Erfindung ist ein Montagekit geschaffen, das einen Dübel mit den oben beschriebenen Merkmalen und ein Befestigungselement (insbesondere eine Schraube oder einen Bolzen) zum Einführen in den Dübel aufweist.

Gemäß noch einem anderen Ausführungsbeispiel der vorliegenden Erfindung ist ein Verfahren zum Herstellen eines Dübels bereitgestellt, wobei das Verfahren ein Bilden einer ersten Komponente mit einer elastisch gelagerten Mitdrehsicherung und ein (insbesondere unabhängiges und/oder nachfolgendes) Bilden einer an der ersten Komponente angeordneten zweiten Komponente aufweist.

Gemäß einem weiteren Ausführungsbeispiel der vorliegenden Erfindung ist ein Verfahren zum Montieren eines Dübels mit den oben beschriebenen Merkmalen in einem Untergrund bereitgestellt, wobei das Verfahren ein Einführen des Dübels in ein

Bohrloch in einem Untergrund aufweist, wodurch sich mindestens ein außenseitiger Überstand der Mitdrehsicherung in radialer Richtung nach innen bewegt. Ferner kann das Verfahren nachfolgend ein Einbringen eines Befestigungselements in den Dübel aufweisen (wodurch sich insbesondere der mindestens eine außenseitige Überstand der Mitdrehsicherung in radialer Richtung nach außen bewegen kann).

Im Rahmen dieser Anmeldung kann unter dem Begriff "Mitdrehsicherung" insbesondere ein in einem Dübel integrierter Mechanismus bzw. eine in einem Dübel integrierte physische Einrichtung verstanden werden, der oder die bei einem drehenden Einbringen eines Befestigungselements in eine Öffnung des in ein Bohrloch eingeführten Dübels den Dübel von einem Mitdrehen mit dem drehenden Befestigungselement abhält oder ein solches Mitdrehen sogar ganz verunmöglicht.

Im Rahmen dieser Anmeldung können unter dem Begriff "erste Komponente und zweite Komponente" insbesondere zwei sich hinsichtlich einer Materialeigenschaft unterscheidende Bestandteile oder zwei materialgleiche oder materialverschiedene Bestandteile verstanden werden, die an einer oder mehreren Materialschnittstellen aneinander angrenzen oder dort miteinander verbunden sein können oder nicht verbunden sein können. Zum Beispiel kann die erste Komponente eine erste Materialkomponente und die zweite Komponente eine andere zweite Materialkomponente sein. Insbesondere können die beiden Komponenten zwei Spritzgusskomponenten sein, die in unterschiedlichen Spritzgussprozeduren hergestellt werden. Es ist möglich, dass die erste Komponente ein erstes Bauteil und die zweite Komponente ein zweites Bauteil ist, wobei die Bauteile miteinander verbunden oder aneinander angeordnet werden (zum Beispiel ineinander eingesteckt werden oder übereinander ausgebildet werden). Die beiden Komponenten können voneinander getrennt oder trennbar sein. Das aneinander Anordnen oder Verbinden der Komponenten kann lösbar oder unlösbar, insbesondere reibschlüssig, formschlüssig und/oder stoffschlüssig, erfolgen und kann mindestens eine Materialschnittstelle zwischen den verbundenen Komponenten generieren.

Im Rahmen dieser Anmeldung kann unter dem Begriff "elastische Lagerung einer Mitdrehsicherung" insbesondere eine ausreichend weich und/oder nachgiebig und/oder elastisch deformierbar an dem Dübel gelagerte Mitdrehsicherung verstanden werden. Die elastische Lagerung der Mitdrehsicherung kann sich dabei insbesondere aus einer Elastizität von einem oder mehreren Lagerpunkten der Mitdrehsicherung gegenüber einem Restmaterial der ersten Komponente und/oder aus einer Elastizität eines Restmaterials der ersten Komponente angrenzend an die Mitdrehsicherung ergeben. Bei einer elastischen Deformation infolge einer Krafteinwirkung durch ein Einführen des Dübels samt Mitdrehsicherung in ein Bohrloch eines Untergrunds und/oder infolge einer Krafteinwirkung durch ein Einführen eines Befestigungselements in eine Öffnung des in einem Bohrloch des Untergrunds befindlichen Dübels kommt es zu einer Auslenkung bzw. Deformation der Mitdrehsicherung (beim Einführen des Dübels in das Bohrloch radial nach innen), die bei Beendigung der Krafteinwirkung reversibel rückgängig gemacht wird. Eine elastische Lagerung der Mitdrehsicherung bewirkt daher eine reversibel-elastische (und keine irreversibel-plastische) Deformation bei einer Krafteinwirkung während des bestimmungsgemäßen Gebrauchs des Dübels. Eine elastische Lagerung der Mitdrehsicherung verhindert ebenfalls, dass die Mitdrehsicherung trotz einer Krafteinwirkung während des bestimmungsgemäßen Gebrauchs des Dübels undeformiert und ortsfest verbleibt. Eine elastische Lagerung kann eine federelastische Lagerung bzw. Federlagerung sein. Eine solche federelastische Lagerung kann bei Krafteinwirkung dem hookeschen Gesetz folgen. Die Mitdrehsicherung sollte hinsichtlich ihres Materials und/oder hinsichtlich ihrer Lagerung so ausgebildet sein, dass sie bei Einführen eines Befestigungselements in den Dübel nach außen mitdrehsichernd gegen den Untergrund gepresst wird.

Gemäß einem exemplarischen Ausführungsbeispiel der Erfindung kann ein Dübel (zum Beispiel im Bereich seines Fußes) mit einer elastisch oder federnd bzw. radial verschiebbar gelagerten Mitdrehsicherung ausgestattet werden. Bei einem zum Beispiel händischen und vorteilhaft werkzeugfreien Eindrücken des Dübels in ein Bohrloch in einem Untergrund kann die so ausgebildete Mitdrehsicherung nach innen verschoben werden und stört beim Einführen des Dübels daher nicht. Folglich ist ein einfaches und kraftarmes Einstecken eines Dübels in ein Bohrloch gegebenenfalls auch ohne Werkzeug ermöglicht. Auch ist ein unerwünschtes Absplittern von Material (zum Beispiel Gips) des Untergrunds angrenzend an das Bohrloch auf diese Weise ebenso vermieden wie eine Zerstörung der Mitdrehsicherung beim Einbringen des Dübels in das Bohrloch. Nachfolgend kann ein Benutzer ein Befestigungselement, insbesondere eine Schraube, in den Dübel einführen, insbesondere eindrehen. Dringt das Befestigungselement in eine entsprechende Öffnung des Dübels ein, so kann das Befestigungselement anschaulich die Mitdrehsicherung aktivieren und diese in radialer Richtung nach außen in das Umgebungsmaterial des Untergrunds eindrücken oder daran andrücken. Dadurch kann eine benutzerfreundliche Handhabung des Dübels mit einer wirksamen Mitdrehsicherung kombiniert werden. Mit Vorteil kann die Mitdrehsicherung ausschließlich als Teil der ersten Komponente ausgebildet werden. Eine davon unabhängige zweite Komponente, die an der ersten Komponente angebracht oder angeordnet werden kann, kann eine oder mehrere weitere funktionale Komponenten des Dübels bereitstellen.

Im Weiteren werden zusätzliche Ausführungsbeispiele des Dübels, des Montagekits und der Verfahren beschrieben.

Gemäß einem Ausführungsbeispiel kann die Mitdrehsicherung so ausgebildet sein, dass mindestens ein außenseitiger bzw. dübelaußenseitiger Überstand (insbesondere ausgebildet als Dorn oder Steg, der sich vorzugsweise in Längsrichtung des Dübels erstreckt) der Mitdrehsicherung in einem kraftfreien Zustand in radialer Richtung über eine Dübelhülse nach außen hin übersteht. Unter der Dübelhülse wird in diesem Zusammenhang die mantelflächenförmige Hülse des Dübels im Bereich des Dübelfußes verstanden, die zum Beispiel ebenfalls durch die beiden Komponenten gebildet sein kann. Der mindestens eine außenseitige bzw. dübelaußenseitige Überstand kann somit an einer Mantelfläche des Dübels ausgebildet sein, insbesondere im Bereich eines Dübelfußes. Zum Beispiel kann sich ein solcher Überstand in axialer Richtung des Dübels bzw. in Einbringrichtung eines Befestigungselements erstrecken, um über einen entsprechenden Längsbereich und daher besonders wirksam Verdrehschutz bewirken zu können. In seiner kraftfreien Ruhelage kann der Überstand über eine kreiszylindrische Dübelaußenfläche radial außenseitig überstehen.

Gemäß einem Ausführungsbeispiel kann die Mitdrehsicherung so ausgebildet sein, dass sich der mindestens eine außenseitige Überstand der Mitdrehsicherung bei Einführen des Dübels in ein Bohrloch in einem Untergrund in radialer Richtung nach innen bewegt, und zwar vorzugsweise mit einer elastischen bzw. federnden Kraft-Auslenkungs-Charakteristik. Über eine verschiebbare Wandung der Mitdrehsicherung können Innenseite und Außenseite der Mitdrehsicherung miteinander wirkverbunden sein. Wenn der Dübel in das zylindrische Bohrloch eingeführt wird, wird radial nach innen eine Kraft von dem Untergrund (angrenzend an das Bohrloch) auf die zuvor radial überstehenden Überstände ausgeübt. Dadurch drückt der Untergrund den oder die Überstände radial nach innen. Aufgrund der elastischen Lagerung der Mitdrehsicherung der ersten Komponente kann dies kraftarm erfolgen, zum Beispiel durch ein Eindrücken des Dübels in das Bohrloch durch bloße Muskelkraft eines Benutzers (insbesondere ohne Hammer). Dadurch ist eine benutzerfreundliche Handhabung des Dübels ermöglicht. Außerdem ist durch das elastische bzw. federnde Nachgeben des Lagers der Mitdrehsicherung vermieden, dass die Mitdrehsicherung unerwünscht an das Bohrloch angrenzende Bereiche des Untergrunds absplittern lässt oder selbst zerstört oder beschädigt wird.

Gemäß einem Ausführungsbeispiel kann die Mitdrehsicherung so ausgebildet sein, dass sich - nach dem vorangehend beschriebenen Einstecken des Dübels in das Bohrloch - der mindestens eine außenseitige Überstand der Mitdrehsicherung bei Einführen eines Befestigungselements in eine Öffnung des in dem Bohrloch befindlichen Dübels in radialer Richtung wieder nach außen bewegt, zum Beispiel zurück in seine vorangehende Ruhelage. In entsprechender Weise kann das Verfahren ein Einführen eines Befestigungselements in eine Öffnung des in dem Bohrloch befindlichen Dübels aufweisen, wodurch sich bei der Mitdrehsicherung der mindestens eine außenseitige Überstand der Mitdrehsicherung in radialer Richtung nach außen bewegt. Erst durch Einführen des Befestigungselements (insbesondere durch drehendes Einführen des Befestigungselements), zum Beispiel einer Schraube, in die Öffnung des Dübels überträgt das Befestigungselement eine nach außen wirkende Kraft auf die zuvor nach innen gedrückte flexibel gelagerte Mitdrehsicherung. Dadurch kann die Mitdrehsicherung an bzw. in die Wandung des Untergrunds angedrückt bzw. eingedrückt werden und kann dadurch einen Schutz vor einer unerwünschten Verdrehung des Dübels bei einem fortgesetzten Eindrehen des Befestigungselements bewerkstelligen. Auf diese Weise ist ein zuverlässiger Schutz vor Verdrehen mit einem einfachen Setzen des Dübels in das Bohrloch und somit eine einfache Handhabung durch einen Benutzer vorteilhaft kombiniert.

Gemäß einem Ausführungsbeispiel kann die Mitdrehsicherung so ausgebildet sein, dass in einem kraftfreien Zustand des Dübels mindestens ein innenseitiger Überstand (zum Beispiel ein Längssteg) der Mitdrehsicherung in radialer Richtung gegenüber einer Dübelhülse radial nach innen zurückversetzt ist. Beispielsweise können ein innenseitiger Überstand und der oben beschriebene außenseitige Überstand auf gegenüberliegenden Hauptflächen eines plättchenförmigen Trägers der Mitdrehsicherung angebracht sein. Mit Vorteil kann ein oder können mehrere radial außenseitige Überstände nicht nur außenseitig als eigentliche Mitdrehsicherung an dem Dübel vorgesehen sein, sondern kann ein oder können mehrere radial innenseitige, zu radial außenseitigen Überständen korrespondierende Überstände eine Aktivierung des Verdrehschutzes durch das in die Öffnung des Dübels eingeführte Befestigungselement verstärken. Durch solche innenseitigen Überstände werden mittels des Befestigungselements die außenseitigen Überstände besonders frühzeitig und besonders wirksam nach außen verschoben. Die innenseitigen Überstände wirken daher als Verstärkungsmechanismus für die Aktivierung des Verdrehschutzes.

Gemäß einem Ausführungsbeispiel kann die Mitdrehsicherung in Einführrichtung eines Befestigungselements in eine Öffnung in dem Dübel axial vorderseitig und/oder rückseitig an Material der ersten Komponente (insbesondere an einem vorderseitigen Verbindungsring und/oder an einem rückseitigen Verbindungsring der ersten Komponente) gelagert sein bzw. stoffschlüssig an solches Material der ersten Komponente angeschlossen sein. Anschaulich kann die jeweilige Mitdrehsicherung in axialer Richtung des Dübels kopfseitig bzw. fußseitig am Rest der ersten Komponente angebracht sein, vorzugsweise kopfseitig und fußseitig. Dadurch ist ein unerwünschtes Abreißen der Mitdrehsicherung vom Rest des Dübels zuverlässig vermieden und die Mitdrehsicherung daher auch unter rauen Bedingungen fehlerrobust einsetzbar.

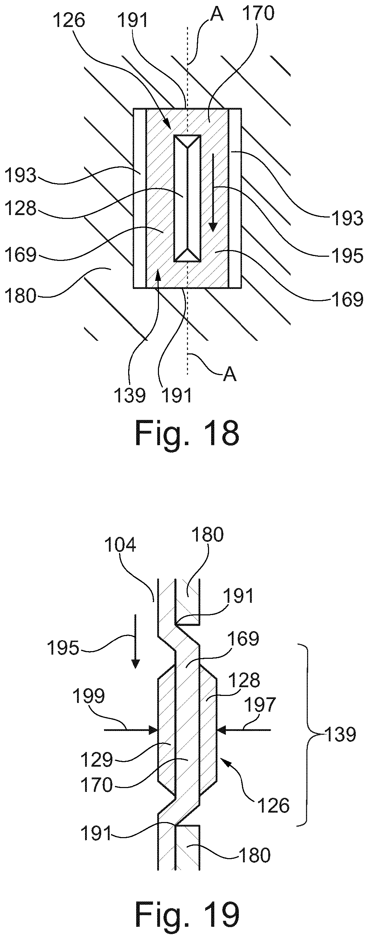

Gemäß einem Ausführungsbeispiel kann die Mitdrehsicherung seitlich - bezogen auf eine Einführrichtung eines Befestigungselements in den Dübel - von der zweiten Komponente getrennt sein (vergleiche Figur 18). Insbesondere in Kombination mit einer Fixierung der Mitdrehsicherung an einer Kopf- und Fußseite an benachbartem Material der ersten Komponente kann durch die seitlich freie Lagerung der Mitdrehsicherung bezüglich der zweiten Komponente und auch bezüglich der ersten Komponente eine Verschiebung nach innen bei Einbringen des Dübels in das Bohrloch und eine nachfolgende Verschiebung nach außen durch das Einbringen des Befestigungselements in kraftarmer Weise ermöglicht werden. Die Mitdrehsicherung kann axial vorderseitig und/oder rückseitig, bezogen auf eine Einführrichtung eines Befestigungselements in eine Öffnung in dem Dübel, an der zweiten Komponente anliegen (ohne aber vorzugsweise an dieser befestigt zu sein). Obwohl die zweite Komponente und die erste Komponente als getrennte Körper ausgebildet sein können, kann bei einem direkten kontaktbehafteten aneinander Anliegen der zweiten Komponente auf bzw. über der ersten Komponente die zweite Komponente die erste Komponente jenseits der Mitdrehsicherung mechanisch verstärken. Dennoch kann die Mitdrehsicherung separat von der zweiten Komponente ausgebildet sein, insbesondere vollständig einen Teil der ersten Komponente bilden.

Gemäß einem Ausführungsbeispiel kann bei dem Dübel die erste Komponente entlang eines Umfangs des Dübels mit mehreren (zum Beispiel vier) elastisch gelagerten Mitdrehsicherungen (insbesondere jeweils mit den oben beschriebenen Merkmalen) versehen sein. Mit in Umfangsrichtung mehreren Mitdrehsicherungen mit den oben beschriebenen Merkmalen kann der Verdrehschutz besonders stark und zuverlässig ausgebildet werden. Gleichzeitig können Inhomogenitäten in Umfangsrichtung vermieden werden, wodurch eine zuverlässige Befestigung des Dübels in einem Bohrloch gefördert wird. Alle Mitdrehsicherungen können ausschließlich als jeweiliger Teil der ersten Komponente ausgebildet sein. Ein Gestalter hat dann eine hohe Designfreiheit hinsichtlich der Ausgestaltung der zweiten Komponente bezüglich der Bereitstellung weiterer Funktionalität. Mehrere entlang des Umfangs des Dübels angeordnete Mitdrehsicherungen können vorzugsweise voneinander den gleichen Winkelabstand aufweisen.

Gemäß einem Ausführungsbeispiel können die mehreren Mitdrehsicherungen dübelfußseitig miteinander verbunden sein. Alternativ oder ergänzend können die mehreren Mitdrehsicherungen dübelkopfseitig miteinander verbunden sein. Ferner kann jede der mehreren Mitdrehsicherungen mit einem jeweils zugeordneten Spreizsteg der ersten Komponente einstückig verbunden sein. Das Verbinden der Mitdrehsicherungen am Dübelfuß und/oder am Dübelkopf erhöht die Stabilität und Robustheit des Dübels. Das kopfseitige und/oder fußseitige Verbinden der Mitdrehsicherungen durch einen jeweiligen Verbindungsring der ersten Komponente verbessert zudem die elastische Lagerung der Mitdrehsicherungen. Durch die Verbindung mit jeweiligen Spreizstegen ist es möglich, den Mitdrehschutz auch auf einen Spreizbereich des Dübels zu erstrecken.

Gemäß einem Ausführungsbeispiel können die erste Komponente und die zweite Komponente zumindest im Bereich der Mitdrehsicherung einen umfänglich im Wesentlichen geschlossenen Schaft bilden. Dadurch ist zum Beispiel ein unerwünschtes Eindringen von Bohrmehl in die Öffnung des Dübels vermieden. Gleichzeitig kann dadurch eine Wasserdichtigkeit erreicht werden. Außerdem kann eine im Wesentlichen durchgehend geschlossene Dübelhülse in Umfangsrichtung die mechanische Robustheit des Dübels stärken.

Gemäß einem Ausführungsbeispiel kann die erste Komponente eine erste Spritzgusskomponente und kann die zweite Komponente eine zweite Spritzgusskomponente sein. In entsprechender Weise kann bei dem Verfahren die erste Komponente mittels eines ersten Spritzgussverfahrens und nachfolgend die zweite Komponente mittels eines separaten zweiten Spritzgussverfahrens hergestellt werden. Insbesondere kann die erste Spritzgusskomponente von der zweiten Spritzgusskomponente (insbesondere genau teilweise) überspritzt sein. Auf diese Weise kann die zweite Komponente auf die erste Komponente in einfacher Weise mittels Spritzgießens aufgespritzt werden. Gleichzeitig sorgt eine solche Kombination von zwei Spritzgusskomponenten für eine reibschlüssige und/oder formschlüssige Kopplung dieser Komponenten und somit für eine hohe mechanische Robustheit.

Gemäß einem Ausführungsbeispiel kann die zweite Komponente aus einem anderen Material ausgebildet sein als ein Material der ersten Komponente. Beispielsweise können die beiden Komponenten unterschiedliche Kunststoffmaterialien sein. Gemäß einem Ausführungsbeispiel kann die zweite Komponente aus einem Material mit höherer Festigkeit oder Härte und/oder mit einem größeren Elastizitätsmodul (d.h. mit geringerer Elastizität) ausgebildet sein als ein Material der ersten Komponente. Dann kann die zweite Komponente eine hohe Rigidität des Dübels sicherstellen, während die erste Komponente ein hohes Maß an Flexibilität bzw. Nachgiebigkeit für die Mitdrehsicherung gewährleisten kann. Unter "Elastizitätsmodul" kann insbesondere ein Zusammenhang bzw. ein Verhältnis zwischen mechanischer Spannung und Dehnung bei der Verformung des jeweiligen Materials verstanden werden. Anschaulich ist der Betrag des Elastizitätsmoduls umso größer, je mehr Widerstand ein Material einer elastischen Verformung entgegensetzt. Unter "Härte" kann insbesondere ein mechanischer Widerstand verstanden werden, den ein Werkstoff der mechanischen Eindringung eines anderen Körpers entgegensetzt. Insbesondere kann die höhere Härte der zweiten Komponente gegenüber einer geringeren Härte der ersten Komponente eine höhere Shore-Härte bezeichnen. Die Shore-Härte kann auf DIN EN ISO 868 oder DIN ISO 7619-1 (jeweils in der am Prioritätstag der vorliegenden Anmeldung aktuellsten Fassung) bezogen sein.

Gemäß einem Ausführungsbeispiel kann ein Aneinandergrenzen zwischen der ersten Komponente und der zweiten Komponente so sein, dass zumindest abschnittsweise eine lösbare Materialschnittstelle zwischen den Komponenten gebildet ist, d.h. die beiden Komponenten zumindest abschnittsweise reibschlüssig und/oder formschlüssig aneinander anliegen, ohne zumindest in dem besagten Abschnitt eine innige stoffschlüssige Verbindung miteinander einzugehen.

Gemäß einem Ausführungsbeispiel ist ein Dübel geschaffen, der einen Fuß mit einer Öffnung zum Einführen eines Befestigungselements (insbesondere einer Schraube oder eines Bolzens), einen Kopf und einen Spreizbereich (insbesondere einen Bereich des Dübels, der bei Einbringen eines Befestigungselements eine Aufspreizung erfährt) zwischen dem Fuß und dem Kopf mit einer Mehrzahl von in Umfangsrichtung bündig aneinander anliegenden (insbesondere abstandsfrei oder ohne Zwischenraum aneinander anliegenden und einander daher berührenden), aber getrennten (insbesondere ohne feste Verbindung an einer Berührfläche und somit als separate Körper ausgebildeten) Spreizstegen (insbesondere langgestreckte Körper oder Materialabschnitte, die bei Einführen eines Befestigungselements in die Öffnung des Dübels eine seitliche Spreizbewegung vollführen können) aufweist.

Gemäß einem anderen Ausführungsbeispiel ist ein Verfahren zum Herstellen eines Dübels bereitgestellt, wobei das Verfahren ein Bilden eines Fußes mit einer Öffnung zum Einführen eines Befestigungselements, ein Bilden eines Kopfs und ein Bilden eines Spreizbereichs zwischen dem Fuß und dem Kopf mit einer Mehrzahl von in Umfangsrichtung bündig aneinander anliegenden, aber getrennten Spreizstegen aufweist.

Gemäß noch einem anderen Ausführungsbeispiel ist ein Verfahren zum Montieren eines Dübels mit den oben beschriebenen Merkmalen in einem Untergrund (genauer gesagt in einer Aufnahmeöffnung eines Untergrunds, zum Beispiel ein Bohrloch) bereitgestellt, wobei das Verfahren, wenn der Untergrund ein Vollkörper ist, ein vollumfängliches Aufspreizen der Spreizstege (insbesondere ein radial nach außen gerichtetes Aufspreizen der Spreizstege gegen eine Wandung des Untergrunds im Wesentlichen ohne in Umfangsrichtung spreizstegfreie Zwischenräume) des Dübels, und wenn der Untergrund ein Hohlkörper ist, ein Verknoten der Spreizstege (insbesondere ein gegenseitiges Umschlingen unterschiedlicher Spreizstege unter Bildung eines das Befestigungselement zumindest teilumfänglich umgreifenden Knäuels der Spreizstege) des Dübels in einem Hohlraum des Hohlkörpers aufweist.

Gemäß noch einem anderen Ausführungsbeispiel ist ein Montagekit geschaffen, das einen Dübel mit den oben beschriebenen Merkmalen und ein Befestigungselement (insbesondere eine Schraube oder einen Bolzen) zum Einführen in den Dübel aufweist.

Gemäß noch einem anderen Ausführungsbeispiel ist eine Montageanordnung bereitgestellt, die ein Montagekit mit den oben beschriebenen Merkmalen und einen Untergrund aufweist, wobei der Dübel in den Untergrund eingeführt ist und das Befestigungselement in den Dübel eingeführt ist.

Im Rahmen dieser Anmeldung kann unter dem Begriff "Untergrund" insbesondere ein zum Verankern des Dübels und des Befestigungselements geeigneter Körper verstanden werden. Ein solcher Untergrund oder Verankerungsgrund kann insbesondere eine Wand, weiter insbesondere eine vertikale Wand, sein. Materialien für einen solchen Untergrund sind insbesondere Holz oder Holzbaustoffe, oder aber auch Beton- und Mauerwerksbaustoffe, Metall, Gipskarton oder Kunststoffbauteile. Ferner kann ein solcher Untergrund auch ein beliebiger Kompositwerkstoff aus mehreren unterschiedlichen Materialkomponenten sein.

Im Rahmen dieser Anmeldung kann unter dem Begriff "Vollkörper" insbesondere ein Untergrund verstanden werden, der - von einer Aufnahmeöffnung (zum Beispiel ein Bohrloch) zum Aufnehmen des Dübels abgesehen - von Hohlkammern frei oder im Wesentlichen frei ist. Hohlkammern in diesem Sinne können insbesondere materialfreie Bereiche (oder Bereiche sehr geringer Dichte, zum Beispiel Ausschäumungen) im Inneren des Untergrunds sein.

Im Rahmen dieser Anmeldung kann unter dem Begriff "Hohlkörper" insbesondere ein Untergrund verstanden werden, der im Inneren (insbesondere in einem Eindringbereich des Dübels und des Befestigungselements in den Untergrund) - zusätzlich zu einer Aufnahmeöffnung (zum Beispiel ein Bohrloch) zum Aufnehmen des Dübels - Hohlkammern, das heißt materialfreie Bereiche, aufweist (oder in für die Befestigungswirkung signifikantem Maße aufweist). Ein solcher Hohlkörper kann eine reguläre Anordnung von Hohlkammern enthalten, beispielsweise gezielt vorgesehene Löcher in einem Ziegel. Auch ein poröser Körper kann als Hohlkörper angesehen werden. Konkrete Beispiele für Hohlkörper sind Hochlochziegelsteine oder poriger Leichtbeton. Auch eine Platte (zum Beispiel eine Gipsplatte), hinter der ein Hohlraum angeordnet ist, kann einen solchen Hohlkörper bilden. Gemäß einen exemplarischen Ausführungsbeispiel der Erfindung soll der Hohlkörper mindestens eine Kammer aufweisen, in der sich der Dübel verknoten kann.

Gemäß einem exemplarischen Ausführungsbeispiel der Erfindung ist ein Dübel geschaffen, bei dem voneinander separat ausgebildete Spreizstege in Umfangsrichtung direkt und ohne Zwischenraum aneinander anliegen. Aneinander unmittelbar angrenzende Spreizstege eines solchen Dübels können somit mechanisch unverbunden sein, aber aneinander anstoßen oder unmittelbar angrenzen. Auf diese Weise ist es einerseits möglich, dass jeder der Spreizstege jeweils unabhängig von anderen Spreizstegen bei Einführen eines Befestigungselements in die Öffnung des Dübels aufspreizen kann und dadurch zu einer festen Verankerung des Dübels in einem Bohrloch oder dergleichen in dem Untergrund beitragen kann. Durch das einander berührende Anordnen der Spreizstege ohne Zwischenräume in einem Zustand des Dübels vor Einbringen des Befestigungselements ist sichergestellt, dass der Dübel in Umfangsrichtung zwischen einander benachbarten Spreizelementen keine nennenswerten Zwischenräume ohne Befestigungswirkung aufweist. Auf diese Weise sind eine besonders sichere Verankerung des Dübels in einem Aufnahmeloch des Untergrunds und eine hohe Auszugskraft sichergestellt.

Gemäß einem anderen Ausführungsbeispiel kann der beschriebene Dübel mit Vorteil sowohl in einem Vollkörperuntergrund (zum Beispiel Vollbeton) als auch in einem Hohlkörperuntergrund (zum Beispiel an einer Holz- oder Gipsplatte mit einem Hohlraum dahinter) mit hohen Auszugskräften montiert werden. Im Falle eines Vollkörpers als Untergrund können sich die Spreizstege insbesondere im Wesentlichen vollumfänglich gegen ein Aufnahmeloch in einem solchen Untergrund verspreizen und dadurch für eine sichere Verankerung des Dübels in dem Untergrund sorgen. Wird hingegen der Dübel an einem Hohlkörper als Untergrund montiert, können sich die in Umfangsrichtung voneinander abstandsfrei vorgesehenen Spreizstege bei Einbringen des Dübels in ein Durchgangsloch des Untergrunds mit dahinterliegendem Hohlraum und bei nachfolgendem (insbesondere drehenden) Einführen eines Befestigungselements in die Öffnung des Dübels die Spreizstege in dem Hohlraum verknoten und sich dabei sowohl um das Befestigungselement herumlegen als auch sich in dem Hohlraum an Material des Untergrunds (zum Beispiel an einer Rückfläche einer Platte) anlegen. Anschaulich können sich die abstandsfrei angeordneten, aber separaten Spreizelemente beim Eindrehen einer Schraube als Befestigungselement in den Dübel alle in die gleiche Richtung drehen und sich daher zum Beispiel hinter einer Deckplatte des Hohlraum aufweisenden Untergrunds aufwickeln. Auf diese Weise ist ein für verschiedenste Untergründe universal einsetzbarer Dübel mit starker Verankerungskraft und hohen Auszugswerten geschaffen.

Gemäß einem Ausführungsbeispiel können die Spreizstege erste Spreizstege und zweite Spreizstege aufweisen. Die ersten Spreizstege können am Fuß und/oder am Kopf des Dübels miteinander verbunden sein. Alternativ oder ergänzend können die zweiten Spreizstege am Fuß und/oder am Kopf des Dübels miteinander verbunden sein. Durch das Verbinden der Gruppe der ersten Spreizstege miteinander bzw. der Gruppe der zweiten Spreizstege miteinander - vorzugsweise am Kopf und am Fuß - kann ein mechanisch besonders stabiler Dübel geschaffen werden, der auch im aufgespreizten Zustand mechanisch intakt bleibt. Die gruppenweise Verbindung der ersten Spreizstege bzw. der zweiten Spreizstege am Kopf bzw. Fuß des Dübels kann zum Beispiel stoffschlüssig erfolgen, indem die genannten Strukturen integral ausgebildet werden (zum Beispiel mittels Spritzgießens). Auch eine chemische Verbindung der jeweiligen Gruppe von Spreizstegen am Kopf und/oder Fuß ist möglich. Alternativ oder ergänzend können die Spreizstege der jeweiligen Gruppe am Kopf und/oder Fuß auch mittels einer mechanischen Verzahnung unter Ausbildung eines Formschlusses miteinander verbunden werden.

Gemäß einem Ausführungsbeispiel können die ersten Spreizstege nicht (insbesondere nicht direkt bzw. nicht unmittelbar) mit den zweiten Spreizstegen verbunden sein. Anders ausgedrückt können die ersten Spreizstege im Verhältnis zu den zweiten Spreizstegen unverbunden sein. Dies ermöglicht es, die ersten Spreizstege und die zweiten Spreizstege funktional voneinander zu trennen und auch in unterschiedlicher Weise auszugestalten. Dies kann zum Beispiel dadurch erreicht werden, dass die ersten Spreizstege als Teil eines Rohlings (zum Beispiel einer ersten Spritzgusskomponente) geformt werden und nachfolgend verbleibende Leerräume unter Erzeugung der zweiten Spreizstege mit Material ausgefüllt werden (zum Beispiel unter Generierung einer zweiten Spritzgusskomponente) bzw. Teilbereiche des Rohlings überspitzt werden. Durch dieses zwei- (oder mehr-) stufige Herstellungsverfahren kann sowohl das zueinander bündige Anordnen der ersten und zweiten Spreizstege als auch das getrennte Ausbilden der ersten und zweiten Spreizstege erreicht werden.

Gemäß einem Ausführungsbeispiel können die ersten Spreizstege und die zweiten Spreizstege aus unterschiedlichen Materialien oder aus dem gleichen Material hergestellt sein. Wenn die ersten Spreizstege und die zweiten Spreizstege aus unterschiedlichen Materialien hergestellt sind, kann die jeweilige Materialwahl in Einklang mit der jeweiligen Funktion der ersten Spreizstege bzw. der zweiten Spreizstege erfolgen. Wenn die ersten Spreizstege und die zweiten Spreizstege aus demselben Material hergestellt sind, können gegebenenfalls unerwünschte Materialbrücken vermieden und etwaige Probleme mit unterschiedlichen Wärmeausdehnungskoeffizienten und dergleichen vermieden werden.

Gemäß einem Ausführungsbeispiel können die ersten Spreizstege und die zweiten Spreizstege in Umfangsrichtung alternierend angeordnet sein. Mit anderen Worten können sich in Umfangsrichtung jeweils ein erster Spreizsteg und ein zweiter Spreizsteg abwechseln. Dadurch ist eine sehr homogene Krafteinleitung von dem Dübel in den Untergrund ermöglicht.

Gemäß einem Ausführungsbeispiel können die ersten Spreizstege und die zweiten Spreizstege zueinander formschlüssig ausgebildet sein. Eine Außenfläche des Spreizbereichs kann dann vorzugsweise vollständig geschlossen bzw. lückenfrei sein. Insbesondere können Teile der ersten Spreizstege in Ausnehmungen einer Struktur eingepasst sein, die von den zweiten Spreizstegen und gegebenenfalls diese verbindenden Verbindungsstrukturen gebildet sind. Auf diese Weise ist ein leicht handhabbarer und kompakter Dübel mit universeller Einsetzbarkeit in unterschiedlichen Untergründen geschaffen.

Gemäß einem Ausführungsbeispiel können die ersten Spreizstege dünner (oder nur teilweise dünner, insbesondere zur Erhaltung von Flexibilität) und aus einem festeren Material als die zweiten Spreizstege ausgebildet sein. Die dünnere Ausbildung der ersten Spreizstege kann sich hierbei insbesondere auf die Umfangsrichtung des Dübels beziehen. Alternativ können die zweiten Spreizstege dünner und aus einem festeren Material als die ersten Spreizstege ausgebildet sein. Die Festigkeit kann sich zum Beispiel auf eine Shore-Härte, eine Bruchdehnung oder eine Schlagzähigkeit beziehen. Auf diese Weise kann bei einem jeweiligen Spreizsteg eine räumlich kompakte Ausgestaltung durch Verwendung eines robusteren Materials ausgeglichen werden.

Gemäß einem Ausführungsbeispiel kann das festere Material ein Hartkunststoff oder ein faserverstärkter Kunststoff sein. Zum Beispiel kann ein Hartkunststoff eine höhere Shore-Härte, eine höhere Bruchdehnung und/oder eine höhere Schlagzähigkeit haben als Polyethylen.

Gemäß einem Ausführungsbeispiel kann das weniger feste Material ein Weichkunststoff sein. Ein solcher Weichkunststoff kann zum Beispiel Polyethylen sein.

Gemäß einem Ausführungsbeispiel können die ersten Spreizstege und die zweiten Spreizstege eine unterschiedliche Flexibilität (oder eine unterschiedliche Rigidität) oder eine unterschiedliche Elastizität (d.h. ein unterschiedliches Elastizitätsmodul) aufweisen. Zum Beispiel können die ersten Spreizstege mechanisch flexibel oder elastisch und die zweiten Spreizstege rigide ausgebildet sein, oder umgekehrt. Auf diese Weise können die Eigenschaften des Dübels auf eine bestimmte Applikation hin angepasst werden.

Gemäß einem Ausführungsbeispiel können die ersten Spreizstege zumindest abschnittsweise von einer zusammenhängenden Matrix umfänglich umgeben sein, welche Matrix auch die zweiten Spreizstege aufweist. Anders ausgedrückt können die ersten Spreizstege in eine zusammenhängende Matrix, welche auch die zweiten Spreizstege umfasst, eingebettet sein. Eine solche zusammenhängende Matrix oder zusammenhängende Struktur kann zum Beispiel die Verbindung der zweiten Spreizstege am Kopf und/oder Fuß des Dübels bewerkstelligen. Die Matrix kann durch eine Spritzgussprozedur hergestellt werden. Mittels einer anderen Spritzgussprozedur können Aussparungen der Matrix unter Bildung der ersten Spreizstege gefüllt werden.

Gemäß einem Ausführungsbeispiel kann der Dübel als Kunststoffdübel ausgebildet sein. Insbesondere kann der Dübel nur aus Kunststoff bestehen. Dies ermöglicht eine wenig aufwendige Fertigung (zum Beispiel mittels Spritzgießens), die angesichts des vollumfänglichen Vorsehens der Spreizstege mit einer hohen Verankerungskraft des Dübels in einem Untergrund kombiniert werden kann.

Gemäß einem Ausführungsbeispiel können die ersten Spreizstege und die zweiten Spreizstege miteinander verzahnt sein. Durch eine gegenseitige Verzahnung der als separate Körper ausgebildeten, aber miteinander in Berührkontakt stehenden ersten und zweiten Spreizstege kann sowohl die Kontaktfläche zwischen benachbarten Spreizstegen erhöht als auch eine formschlüssige Kopplung der einander berührenden Spreizstege ermöglicht werden. Zum Beispiel können Zahnstrukturen in Umfangsrichtung der ersten Spreizstege ausgebildet werden, die mit invers geformten Zahnstrukturen entlang von Seiten der zweiten Spreizstege in Eingriff sind.

Gemäß einem Ausführungsbeispiel kann zumindest ein Teil der Spreizstege in Axial- oder Setzrichtung des Dübels alternierend breitere Abschnitte und schmälere Abschnitte aufweisen. Die abwechselnd breiteren und schmäleren Abschnitte der Spreizstege können durch die oben beschriebenen Zahnstrukturen gebildet sein.

Gemäß einem Ausführungsbeispiel kann der Spreizbereich in Umfangsrichtung spaltfrei geschlossen sein. Anschaulich weist gemäß der beschriebenen Ausführungsform der Spreizbereich keine Schlitze zwischen Spreizstegen auf und ist daher (zumindest im Wesentlichen) vollumfänglich geschlossen. Gemäß einem solchen bevorzugten Ausführungsbeispiel kann der Dübel entlang seines gesamten Umfangs oder zumindest im Wesentlichen entlang seines gesamten Umfangs von Zwischenräumen frei sein, bevor das Befestigungselement in die Öffnung des Dübels eingeführt wird. Auf diese Weise ist es möglich, mittels der Spreizstege entlang des gesamten Umfangs des Dübels eine im Wesentlichen gleiche radial nach außen gerichtete Befestigungskraft auf einen Untergrund auszuüben, in den der Dübel samt Befestigungselement eingeführt ist. Wenn der gesamte (oder im Wesentlichen der gesamte) Umfang des Dübels mit Kunststoff gefüllt ist, kann durch Vermeiden größerer Luftlöcher zwischen benachbarten Spreizstegen auch ein unerwünschter Verlust an Haltekraft vermieden werden.

Gemäß einem Ausführungsbeispiel können die Spreizstege ausgebildet sein, bei Einführen eines Befestigungselements in den, in einen als Vollkörper ausgebildeten Untergrund eingeführten Dübel gemeinsam aufzuspreizen. Wird also zum Beispiel eine Schraube in die Öffnung des Dübels eingedreht, der in ein Sackloch oder Durchgangsloch des Vollkörpers eingeführt ist, übt die Schraube (oder ein anderes Befestigungselement) eine radial nach außen gerichtete Kraft auf die in Umfangsrichtung spaltfrei einander berührend und aneinander angestückten Spreizstege aus und verspreizt diese gegen den Untergrund. Auf diese Weise ist eine sehr zuverlässige Verankerung von Dübel und Befestigungselement in dem Vollkörper sichergestellt, da in Umfangsrichtung im Wesentlichen durchgehend eine Übertragung einer radial nach außen gerichteten Befestigungskraft von dem Dübel auf den Untergrund erfolgt.

Gemäß einem Ausführungsbeispiel können die Spreizstege ausgebildet sein, bei Einführen eines Befestigungselements in den, in einen als Hohlkörper ausgebildeten Untergrund eingeführten Dübel miteinander zu verknoten. Dieselben Spreizstege, die bei Einführen des Dübels in einen als Vollkörper ausgebildeten Untergrund eine nach außen gerichtete vollumfängliche Verspreizung ermöglichen, können bei alternativem Einführen des Dübels in einen als Hohlkörper ausgebildeten Untergrund durch eine Setzkraft des Befestigungselements vom Kopf des Dübels gelöst oder abgetrennt werden und dann (insbesondere bei Einwirken eines Drehmoments infolge des Einbringens des als Schraube ausgebildeten Befestigungselements in den Dübel) eine verdrillende Verknotung miteinander erfahren. Anschaulich können freie Enden der von dem Kopf gelösten bzw. abgetrennten ersten und zweiten Spreizstege unter dem Einfluss eines Drehmoments oder einer anderen geeigneten Kraft miteinander verhaken und dann eine Knotenstruktur in dem Hohlraum (zum Beispiel an einer Rückwand einer den Hohlraum begrenzenden Platte) ausbilden.

Gemäß einem Ausführungsbeispiel des Dübels kann der Kopf vor Einbringen des Befestigungselements in den Dübel geschlossen sein. Anschaulich kann der Kopf als geschlossene Kappe ausgebildet sein, die im montierten Zustand des Dübels im Bohrlochtiefsten angeordnet sein kann. Auf diese Weise kann vermieden werden, dass Bohrmehl, Schmutz, etc. in die Öffnung des Dübels zum Aufnehmen des Befestigungselements eindringt.

Gemäß einem Ausführungsbeispiel kann der Kopf eine Sollbruchstelle aufweisen, die bei Einbringen eines Befestigungselements in den Dübel unter Öffnung des Kopfes aufgebrochen werden kann bzw. aufzubrechen ist. Zum Beispiel kann in einer Stirnfläche des Kopfs eine (beispielsweise kreuzförmige) Opferstruktur integriert werden, die an der (zum Beispiel umlaufenden) Sollbruchstelle vom Rest des beispielsweise kappenförmigen Kopfes umgeben ist. Beispielsweise ist es möglich, einen Kappenbereich des Kopfes gemeinsam mit einer Matrix auszubilden, die auch die zweiten Spreizstege und deren kopfseitige bzw. fußseitige Verbindungsstrukturen enthält. Die durch die Sollbruchstelle von der Matrix getrennte Opferstruktur kann dann zum Beispiel gemeinsam mit den ersten Spreizstegen geformt werden.

Gemäß einem Ausführungsbeispiel kann der Kopf Dehnungsfugen aufweisen, die ganz oder teilweise mit Rippen gefüllt sind. Die Dehnungsfugen können Aussparungen in der Matrix sein, wohingegen die Rippen gemeinsam mit den ersten Spreizstegen gebildet werden können. Das Zusammenspiel der Dehnungsfugen mit den Rippen bewirkt, dass das Befestigungselement leicht in die Öffnung des Dübels eingeführt werden kann und eine wirksame radiale Aufspreizung der Spreizstege bewerkstelligen kann.

Gemäß einem Ausführungsbeispiel kann zumindest ein Teil der Dehnungsfugen eine von 90° zu einer Axialrichtung des Dübels abweichende Schrägwinkelstellung aufweisen. Durch die Schrägstellung von Dehnungsfugen und zugehörigen Rippen kann eine gewünschte Aufweitung des Durchmessers ermöglicht werden, wenn das Befestigungselement in die Öffnung des Dübels eingeführt wird.

Gemäß einem Ausführungsbeispiel kann der Fuß eine Mitdrehsicherung aufweisen, insbesondere ausgebildet als in Umfangsrichtung außenseitig verteilt angeordnete und radial nach außen überstehende Dorne. Eine solche Mitdrehsicherung verunmöglicht oder unterdrückt, dass sich der Dübel unerwünscht mitdreht, wenn ein zum Beispiel als Schraube ausgebildetes Befestigungselement in die Öffnung des Dübels eingedreht wird. Dadurch kann ein durch ein unerwünschtes Mitdrehen des Dübels beim Setzen des Befestigungselements einhergehender Verlust an Befestigungskraft des Dübels in dem Untergrund vermieden werden.

Gemäß einem Ausführungsbeispiel kann zumindest im Spreizbereich ein Aufnahmekanal (der die axiale Fortsetzung der Öffnung des Dübels im Inneren des Dübels darstellt) zum Aufnehmen eines Befestigungselements im Inneren des Dübels mehrere innenseitig hineinragende Überstände aufweisen, die als innenseitige Endbereiche von zumindest einem Teil der (insbesondere ersten) Spreizelemente ausgebildet sein können. Insbesondere können die innenseitigen Überstände (insbesondere ausschließlich) durch die ersten Spreizstege gebildet sein. Ein Einführen des Befestigungselements in die Öffnung bzw. den Aufnahmekanal des Dübels führt dann zunächst zu einem Aufspreizen der ersten Spreizstege. Die zweiten Spreizstege können bei der radial nach außen gerichteten Bewegung der ersten Spreizstege reibschlüssig mitgenommen werden bzw. können bei fortgesetztem Einführen des Befestigungselements nach außen aufgespreizt werden.

Gemäß einem Ausführungsbeispiel können der Kopf und/oder der Fuß ausgebildet sein, dass dort im Betrieb keine Spreizung erfolgt. Die beiden einander gegenüberliegenden Endbereiche des Dübels, die Fuß und Kopf bilden, können somit der Stabilität dienen, wohingegen ein dazwischen angeordneter Mittenbereich die Spreizfunktion des Dübels verwirklicht.

Gemäß einem Ausführungsbeispiel kann das Verfahren ein Herstellen der Spreizstege aufweisen, bei dem zunächst erste Spreizstege gebildet werden und erst nachfolgend zweite Spreizstege gebildet werden. Zum Beispiel können die ersten Spreizstege als Rohling oder Teil eines Rohlings gebildet werden, dessen Zwischenräume dann durch Material der zweiten Spreizstege ausgefüllt werden können. Auf diese Weise können Bereiche des Dübels, die herkömmlich materialfrei sind, durch zusätzliche Spreizelemente, Spreizschenkel oder Spreizstege ausgefüllt werden, wodurch eine Befestigungskraft des Dübels in einem Untergrund erhöht werden kann.

Gemäß einem Ausführungsbeispiel können bei dem Verfahren die ersten Spreizstege mittels eines ersten Spritzgussverfahrens und nachfolgend die zweiten Spreizstege mittels eines nachfolgenden zweiten Spritzgussverfahrens hergestellt werden. Zwei aufeinanderfolgende Spritzgussverfahren sind besonders gut geeignet, den Spreizbereich mit in Umfangsrichtung bündig aneinander anliegenden, aber getrennten Spreizstegen herzustellen.

Gemäß einem Ausführungsbeispiel können bei dem Verfahren die ersten Spreizstege mittels eines ersten Werkzeugs (insbesondere mittels eines ersten Spritzgusswerkzeugs) und nachfolgend die zweiten Spreizstege mittels eines anderen zweiten Werkzeugs (insbesondere mittels eines zweiten Spritzgusswerkzeugs) hergestellt werden. Es können also zwei unterschiedliche Spritzgusswerkzeuge zum Einsatz kommen, deren jeweilige Formgebung durch die durch sie auszubildenden Strukturmerkmale des Dübels festgelegt ist.

Gemäß einem Ausführungsbeispiel kann ein Einbringen des Dübels und nachfolgend des Befestigungselements in den Untergrund nach Bilden einer Vorbohrung in dem Untergrund erfolgen. Eine solche Vorbohrung in einem Untergrund, der als Vollkörper ausgebildet ist, kann ein Sackloch sein. In einem Untergrund, der als Hohlkörper ausgebildet ist, kann die Vorbohrung ein Durchgangsloch sein, das sich bis in mindestens einen ersten Hohlraum hinein erstreckt.

Im Folgenden werden exemplarische Ausführungsbeispiele der vorliegenden Erfindung mit Verweis auf die folgenden Figuren detailliert beschrieben.
Figur 1 zeigt eine dreidimensionale Ansicht eines Dübels gemäß einem exemplarischen Ausführungsbeispiel der Erfindung.
Figur 2 zeigt eine erste Spritzgusskomponente des Dübels gemäß Figur 1.
Figur 3 zeigt eine zweite Spritzgusskomponente des Dübels gemäß Figur 1.
Figur 4 zeigt eine Seitenansicht des Dübels gemäß Figur 1.
Figur 5 zeigt eine Schnittansicht des Dübels gemäß Figur 1 bis Figur 4 entlang einer in Figur 4 dargestellten Schnittebene A-A.
Figur 6 zeigt eine Schnittansicht des Dübels gemäß Figur 1 bis Figur 4 entlang einer in Figur 4 dargestellten Schnittebene B-B.
Figur 7 zeigt eine Schnittansicht des Dübels gemäß Figur 1 bis Figur 4 entlang einer in Figur 4 dargestellten Schnittebene C-C.
Figur 8 zeigt eine räumliche Ansicht in ein Inneres des Dübels gemäß Figur 1 bis Figur 7.
Figur 9 zeigt einen Dübel, bei dem Spreizstege in einem als Vollkörper ausgebildeten Untergrund aufgespreizt sind.
Figur 10 zeigt den Dübel gemäß Figur 9, bei dem die Spreizstege in einem als Hohlkörper ausgebildeten Untergrund verknotet sind.
Figur 11 zeigt eine Seitenansicht eines Dübels gemäß einem anderen Ausführungsbeispiel der Erfindung mit elastisch gelagerter Mitdrehsicherung.
Figur 12 zeigt eine Querschnittsansicht des Dübels gemäß Figur 11.
Figur 13 zeigt eine räumliche Ansicht des Dübels gemäß Figur 11.
Figur 14 zeigt eine Seitenansicht eines Dübels gemäß einem anderen Ausführungsbeispiel der Erfindung mit elastisch gelagerter Mitdrehsicherung.
Figur 15 zeigt eine dreidimensionale Ansicht einer ersten Spritzgusskomponente eines Dübels mit elastisch gelagerter Mitdrehsicherung gemäß einem exemplarischen Ausführungsbeispiel der Erfindung.
Figur 16 zeigt eine dreidimensionale Ansicht einer zweiten Spritzgusskomponente des besagten Dübels.
Figur 17 zeigt eine dreidimensionale Ansicht eines Dübels gemäß einem exemplarischen Ausführungsbeispiel der Erfindung, der aus der in Figur 15 dargestellten ersten Spritzgusskomponente mit elastisch gelagerter Mitdrehsicherung und der in Figur 16 dargestellten zweiten Spritzgusskomponente gebildet ist.
Figur 18 zeigt einen Teilbereich einer Außenwandung eines Dübels mit elastisch gelagerter Mitdrehsicherung gemäß einem exemplarischen Ausführungsbeispiel der Erfindung.
Figur 19 zeigt eine Querschnittsansicht des Teilbereichs gemäß Figur 18.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel der Erfindung kann ein Dübel mit einer flexiblen Mitdrehsicherung geschaffen werden. Hierbei ist besonders vorteilhaft, wenn der Dübel aus zwei miteinander verbundenen (insbesondere mittels Spritzguss hergestellten) Komponenten aufgebaut wird. Die erste der Komponenten kann die (zum Beispiel selbst rigide, aber elastisch gelagerte) Mitdrehsicherung bereitstellen und an einer, zwei oder mehr Positionen flexibel, federnd bzw. elastisch lagern. Die zweite der Komponenten kann im Bereich der Mitdrehsicherung eine diese freilegende Aussparung aufweisen und die Mitdrehsicherung zumindest teilumfänglich umgeben. Optional kann die zweite Komponente zusätzliche funktionale Beiträge zum Dübel leisten, zum Beispiel Spreizstege bereitstellen.

Kunststoffdübel sind meistens für die Anwendung in verschiedenen Baustoffen gedacht. Das Setzen und Verspreizen bzw. Verknoten des Dübels in Untergründen wie Trockenbauwände oder Hohlmauerwerk stellt andere Voraussetzungen an die Dübel wie der Untergrund Beton oder Vollmauerwerk.

Die unterschiedlichen Befestigungsarten Verspreizen bzw. Verknoten bedeuten für den Dübel unterschiedliche Anforderungen an die Konstruktion des Dübels selbst.

Beim Einbringen einer Schraube oder eines anderen Befestigungselements zur Verankerung des Dübels erzeugt die Schraube ein Drehmoment. Das durch die Schraube auf den Dübel übertragene Drehmoment ist insbesondere vom Durchmesser der Schraube abhängig. Dieses Drehmoment wird auf den Dübel im Untergrund übertragen. Bei Vollbaustoffen könnte dieses Drehmoment auf den Dübel über die gesamte Mantelfläche des Dübels zum Bohrloch abgefangen werden. Bei Gipskarton oder Hohlmauerwerk steht hierfür aber nur die Dicke der Platte oder des äußeren Mauersteges zur Verfügung. Deshalb können Kunststoffdübel am Fuß mit einem kurzen, seitlich geschlossenen, kreisrunden Schaft hergestellt werden, an deren äußerer Fläche Längsstege angebracht sind, die sich im Untergrund aufgrund des Übermaßes gegenüber dem Durchmesser des Bohrloches verhaken. Diese Konstruktion mit einem solchen Schaft lässt es aber nicht mehr zu, dass der Dübel von Hand in das Bohrloch gesteckt werden kann. Ein Hammer ist dann zwingend nötig.

Eine Mitdrehsicherung gemäß einem exemplarischen Ausführungsbeispiel der Erfindung, zum Beispiel ausgebildet als federnd gelagerte Längsstege, kann derart elastisch gelagert werden, dass sie leicht (insbesondere nur mittels Muskelkraft eines Benutzers zum Überwinden der Kraft der Bohrlochwandung auf die Mitdrehsicherung beim Einstecken des Dübels in das Bohrloch) nach innen versenkbar ist. Auf diese Weise kann sichergestellt werden, dass die Mitdrehsicherung beim Einstecken des Dübels in ein Bohrloch in einem Untergrund nicht hinderlich ist. Die Schraube (bzw. ein anderes Befestigungselement) drückt nachfolgend je nach Durchmesser die Mitdrehsicherung(en) stärker oder weniger stark wieder nach außen und gegen die Bohrlochwand. Dadurch entsteht ein passendes Verhältnis zwischen aufkommendem Drehmoment und wirkender Kraft auf das Eindrücken der Mitdrehsicherung in den Untergrund.

Bei Bilden eines Dübels aus zwei Komponenten (insbesondere aus zwei Spritzgusskomponenten oder anderen Bauteilen) ist es möglich, einen geschlossenen zylindrischen Schaft zu erzeugen und doch gleichzeitig eine seitliche Trennung der Mitdrehsicherung (insbesondere von Stegen einer Mitdrehsicherung) zum Schaft zu erreichen. Die Stege der Mitdrehsicherung können dann mit Vorteil nur in Richtung zum Dübelkopf und Dübelschaft mit dem umgebenden Schaft verbunden sein. Zum Beispiel dadurch ist eine federnde Lagerung der Mitdrehsicherung erreichbar. Zusätzlich können innen am Dübel ebenfalls Überstände (zum Beispiel Stege) angebracht werden, die das Herausdrücken der Mitdrehsicherung nach außen verstärken und gleichzeitig das Ansetzen der Schraube in den Dübel unterstützen.

Die zum Beispiel unter Verwendung von Längsstegen ausbildbaren Mitdrehsicherungen können gemäß einem exemplarischen Ausführungsbeispiel der Erfindung insbesondere bei einem Dübel aus Kunststoff in Längsrichtung durch Aussparungen vom zylindrischen Schaft freigelegt werden. Eine solche Mitdrehsicherung kann an ihren insbesondere axialen Enden federnd gelagert werden.

Ein Dübel mit elastisch gelagerter Mitdrehsicherung gemäß einem exemplarischen Ausführungsbeispiel der Erfindung kann von einem Benutzer problemlos von Hand in ein Bohrloch gesteckt werden, da dadurch die Mitdrehsicherung federnd nach innen bewegt wird und die Einsteckkraft reduziert. Erst durch das Einbringen der Schraube oder eines anderen Befestigungselements tritt die Wirkung der Mitdrehsicherung je nach Schraubendurchmesser stärker oder weniger stark in Kraft. Anschaulich kann gemäß einem exemplarischen Ausführungsbeispiel der Erfindung die Mitdrehsicherung des Dübels eine Art elastische Schnappverbindung ausbilden.

Gemäß einem Ausführungsbeispiel kann die Mitdrehsicherung ausschließlich als Teil einer ersten Komponente des Dübels ausgebildet sein. Die Mitdrehsicherung kann an der ersten Komponente zum Beispiel ausschließlich vorderseitig und rückseitig in axialer Richtung an verbleibendem Material der ersten Komponente elastisch gelagert sein. Die elastische Lagerung kann sich dabei aus an die Mitdrehsicherung angrenzendem elastischen Material der ersten Komponente und/oder aus einer von einer Lagerstelle selbst bereitgestellten Elastizität und/oder aus der Geometrie (beispielsweise entsprechend dicken Verbindungstegen zum übrigen Material bzw. Schaft des Dübels) ergeben. Gemäß einem Ausführungsbeispiel kann die Mitdrehsicherung von einer zweiten Komponente des Dübels getrennt ausgebildet sein, sodass die zweite Komponente zur Mitdrehsicherung gemäß einem Ausführungsbeispiel nichts beiträgt.

Gemäß einem anderen exemplarischen Ausführungsbeispiel der Erfindung können Spreizstege eines Dübels mittels Zweikomponenten-Spritzguss hergestellt werden, sodass diese in Umfangsrichtung bündig aneinander anliegen, aber separate Körper bleiben. Hierbei kann zunächst eine erste Komponente in einem Spritzgusswerkzeug gespritzt werden und dann die zweite Komponente unter Verwendung eines zweiten, anderen Spritzgusswerkzeugeinsatzes hinzugefügt werden. Dadurch können getrennte erste und zweite Spreizstege bündig aneinander gefertigt werden.

Hierbei ist es möglich, Spreizstege aus unterschiedlichen Materialien an Enden zum Beispiel chemisch zu verbinden und/oder durch eine mechanische Verzahnung untereinander zu verhaken.

Die Spreizstege können durch das Fertigungsverfahren konstruktiv auf einen jeweiligen Kunststoff angepasst werden, der zur Fertigung der ersten Komponente bzw. der zweiten Komponente verwendet werden kann. Zum Beispiel kann ein dünner flexibler Spreizsteg aus hartem Kunststoff gefertigt werden, wohingegen ein dicker und steifer Spreizsteg aus weichem Kunststoff gefertigt werden kann. Insbesondere können dünnere Spreizstege gemäß exemplarischen Ausführungsbeispielen der Erfindung aus einem harten oder glasfaserverstärkten Kunststoff gefertigt werden. Hierbei können zum Beispiel teilweise größere Flächen gefertigt werden, die einen größeren Spreizdruck erzeugen. Eine Flexibilität kann durch dünnere Teilstücke als Anbindungen gewährleistet werden. Eine solche Konfiguration kann zum Beispiel durch eine entsprechende Ausgestaltung von Schiebern eines Spritzgusswerkzeugs erhalten werden. Breitere Stege können aufgrund des größeren Querschnitts schwerer verdrehbar sein, weshalb dafür ein weicher Kunststoff (wie zum Beispiel Polyethylen) verwendet werden kann. Spreizstege unterschiedlicher oder gleicher Festigkeit können umlaufend versetzt angeordnet und an den Enden über die Konstruktion miteinander verbunden werden.

Gemäß einem Ausführungsbeispiel der Erfindung sind die Spreizstege nicht gerade ausgeführt, sondern können über eine Verzahnung (zum Beispiel entsprechend einem Winkel von 45°) aneinander anliegen. Beim Verdrehen des Dübels kann dann anschaulich eine axiale Verschiebung bzw. Dehnung der Spreizstege untereinander erfolgen. Wegen der (zum Beispiel mit einem Winkel von 45° ausgebildeten) Verzahnung entsteht auch eine Aufweitung oder Vergrößerung des Abstands der Spreizstege zueinander. Dadurch kann ein Knoten, der bei Setzen des Dübels in einen als Hohlkörper ausgebildeten Untergrund in dem Hohlkörper durch die miteinander wechselwirkenden Spreizstege erzeugt werden kann, im Volumen größer werden. Dies kann eine größere Abstützfläche und somit höhere Auszugskräfte bei der Befestigung in Untergründen mit Hohlraum (zum Beispiel Plattenmaterialien) bewirken.

Aufgrund des beschriebenen Herstellungsverfahrens können gemäß einem exemplarischen Ausführungsbeispiel der Erfindung die Spreizstege auch um einen vorgebbaren Winkel (bevorzugt 90°) verdreht um einen Kern angeordnet werden. Somit ist die Verknotungsrichtung vorgegeben und erleichtert. Bevorzugt kopf- und fußseitig unbefestigte erste Spreizstege (wobei zum Beispiel vier erste Spreizstege vorgesehen sein können), die mit Vorteil dübelinnenseitige Überstände aufweisen können, bewirken einen frühzeitigen Beginn des Spreizvorgangs beim Einführen eines Befestigungselements in eine Öffnung des Dübels. Von vorne nach hinten durchgehende zweite Spreizstege (wobei zum Beispiel vier zweite Spreizstege vorgesehen sein können) fördern eine präzise Zentrierung eines Befestigungselements (insbesondere einer Schraube). Eine Sollbruchstelle im Inneren des Dübelkopfes ermöglicht ein leichtes Durchdringen der geschlossenen Dübelspitze am Kopf durch das Befestigungselement (insbesondere einer Schraube). Eine Mitdrehsicherung am Dübelfuß kann mit Vorteil aus einem harten Kunststoff ausgebildet werden, damit sich die Mitdrehsicherung in den Untergrund einschneiden kann. Rippen, welche ein Gewinde am Dübelkopf bilden können, können abgeschrägt ausgeführt werden. Dann können diese Rippen beim Spreizen des Dübels den äußeren Bereich der Dübelhülse dehnen, wodurch das Befestigungselement (insbesondere eine Schraube) leicht einzubringen (insbesondere einzuschrauben) ist.

Mit Vorteil kann gemäß exemplarischen Ausführungsbeispielen der Erfindung annähernd eine gesamte Dübelhülse ohne Verluste (herkömmlich verursacht durch Zwischenräume zwischen funktionalen Spreizstegen) für eine Spreizwirkung ausgenutzt werden. Ferner können durch den Einsatz von Spreizstegen aus hartem Kunststoff mit dünnen Bereichen zur Implementierung von Flexibilität hohe Auszugskräfte erreicht werden. Hohe Auszugskräfte können auch durch ein Verknoten von breiteren weichen Spreizstegen gefördert werden. Des Weiteren kann eine Volumenvergrößerung eines resultierenden Knotens durch Verschiebeelemente mit entsprechender Winkelstellung (vorteilhaft 45°) erreicht werden.

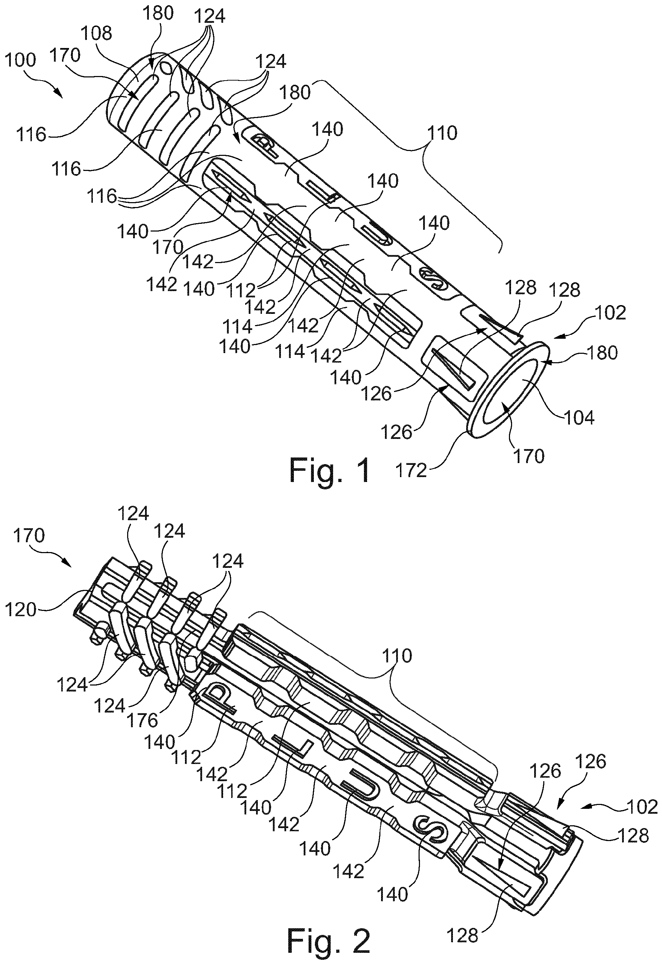

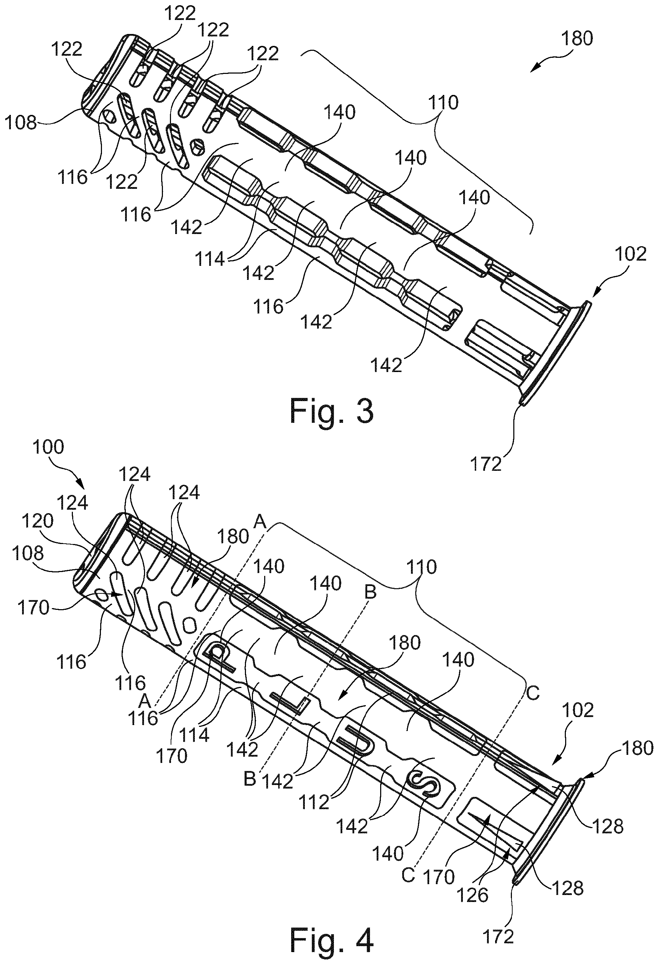

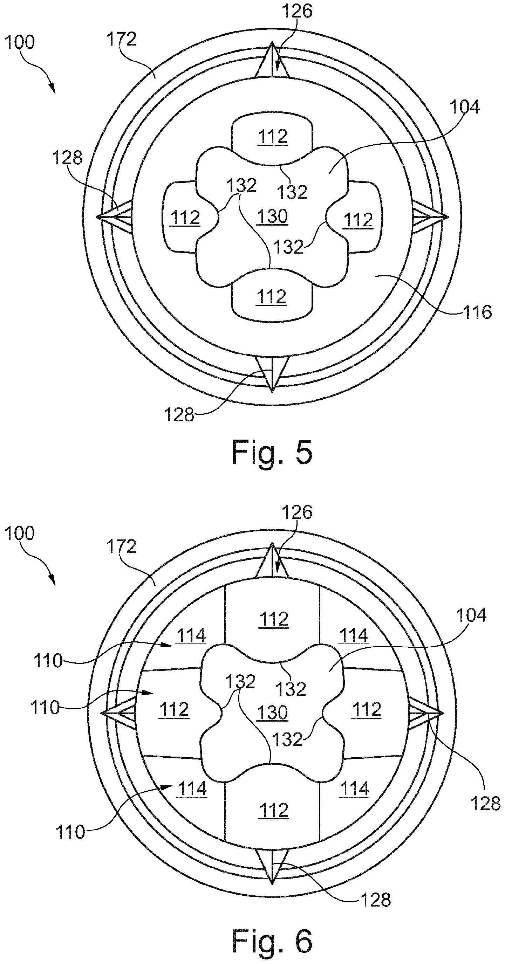

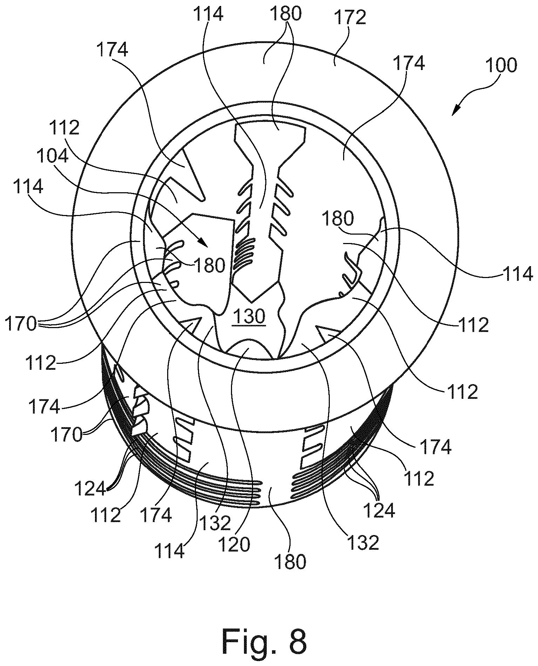

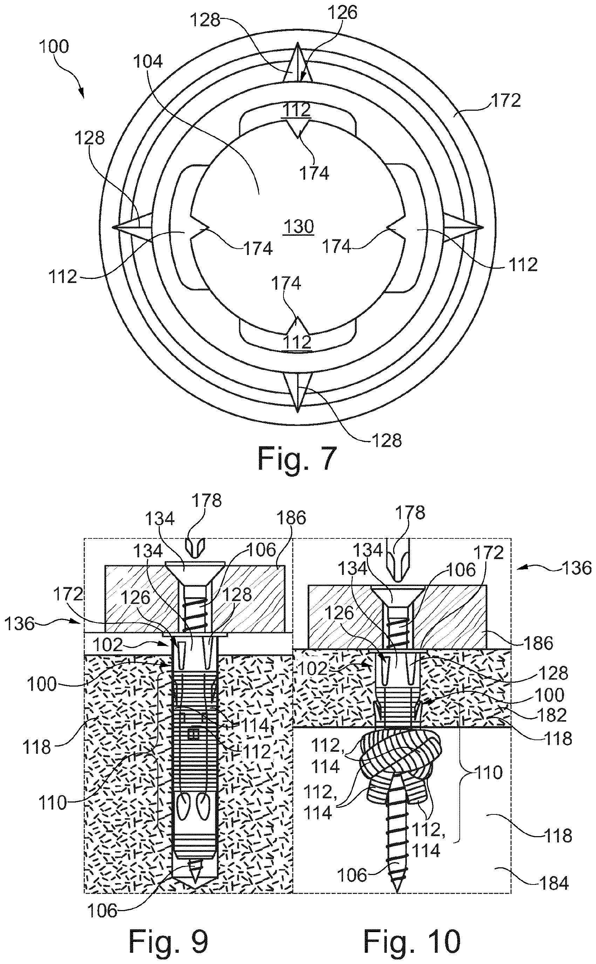

**Figur 1** zeigt eine dreidimensionale Ansicht eines Dübels 100 gemäß einem exemplarischen Ausführungsbeispiel der Erfindung, der aus zwei Spritzgusskomponenten 170, 180 entsprechend zweier getrennter Spritzgussverfahren aufgebaut ist. **Figur 2** zeigt eine erste Spritzgusskomponente 170 des Dübels 100 gemäß Figur 1 ohne die zweite Spritzgusskomponente 180. **Figur 3** zeigt die zweite Spritzgusskomponente 180 des Dübels 100 gemäß Figur 1 ohne die erste Spritzgusskomponente 170. **Figur 4** zeigt eine Seitenansicht des gesamten Dübels 100 gemäß Figur 1, d.h. mit beiden Spritzgusskomponenten 170, 180. **Figur 5** zeigt eine Schnittansicht des Dübels 100 gemäß Figur 1 bis Figur 4 entlang einer in Figur 4 dargestellten Schnittebene A-A. **Figur 6** zeigt eine Schnittansicht des Dübels 100 gemäß Figur 1 bis Figur 4 entlang einer in Figur 4 dargestellten Schnittebene B-B. **Figur 7** zeigt eine Schnittansicht des Dübels 100 gemäß Figur 1 bis Figur 4 entlang einer in Figur 4 dargestellten Schnittebene C-C. **Figur 8** zeigt eine räumliche Ansicht in ein Inneres des Dübels 100 gemäß Figur 1 bis Figur 7.

Der in Figur 1 bis Figur 8 dargestellte Dübel 100 ist als Kunststoffdübel ausgebildet, d.h. besteht ausschließlich aus Kunststoff. Kunststoffe der ersten Spritzgusskomponente 170 und der zweiten Spritzgusskomponente 180 können identisch oder unterschiedlich sein.

Der Dübel 100 weist als ersten Endabschnitt einen Fuß 102 mit einem außenseitigen ringförmigen Kragen 172 und einer Öffnung 104 zum Einführen eines vorzugsweise als Schraube ausgebildeten und in Figur 9 und Figur 10 dargestellten Befestigungselements 106 auf. Die Öffnung 104 an der Außenseite des Dübels 100 im Bereich des Fußes 102 mündet im Inneren des Dübels 100 in einen Aufnahmekanal 130 zum Aufnehmen des Befestigungselements 106 (vergleiche Figur 5 bis Figur 8).

An seiner Außenseite hat der Fuß 102 eine Mitdrehsicherung 126 zum Vermeiden eines Mitdrehens des Dübels 100 bei einem drehenden Einbringen eines als Schraube ausgebildeten Befestigungselements 106 in die Öffnung 104 und nachfolgend in den Aufnahmekanal 130. Die Mitdrehsicherung 126 ist in dem dargestellten Ausführungsbeispiel durch vier in Umfangsrichtung außenseitig verteilt angeordnete und radial über eine Mantelfläche des Dübels 100 überstehende Dorne, Stege oder Überstände 128 (zum Beispiel aus Hartkunststoff) mit scharfen Schneidkanten ausgebildet. Diese Schneidkanten können sich nach Einführen des Dübels 100 in ein Bohrloch (oder dergleichen) in einem Untergrund 118 (siehe Figur 9 und Figur 10) in den Untergrund 118 eingraben und dadurch einen Verdrehschutz bewerkstelligen.

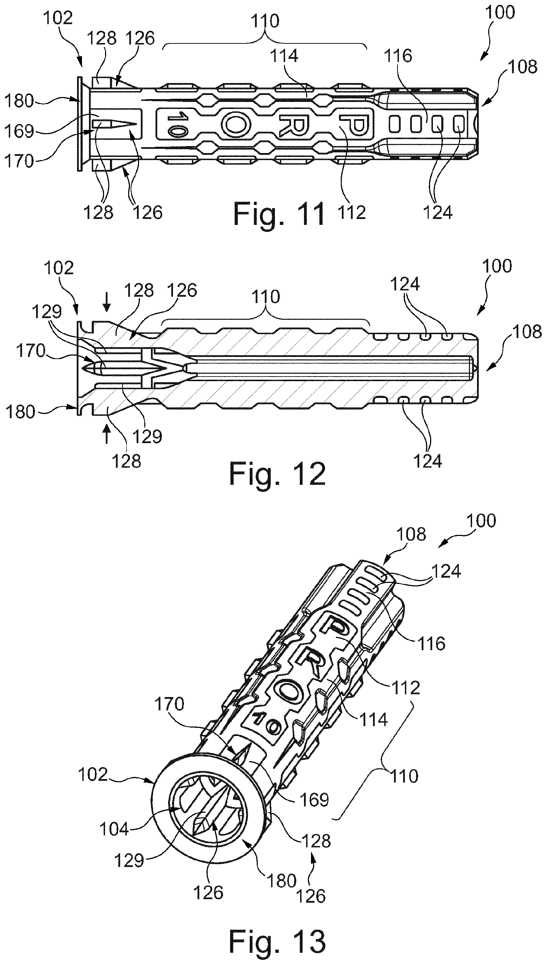

Der Dübel 100 weist an seiner ersten Komponente 170 also die daran ausgebildete Mitdrehsicherung 126 auf. Die von der ersten Komponente 170 gebildete Mitdrehsicherung 126 ist vorzugsweise an angrenzendem Material der ersten Komponente 170 elastisch gelagert. Die an bzw. über der ersten Komponente 170 angeordnete zweite Komponente 180 ist im Bereich der Mitdrehsicherung 126 mit einem Fenster versehen, sodass die Mitdrehsicherung 126 sowohl dübelinnenseitig als auch dübelaußenseitig freigelegt ist. Dies wird bezugnehmend auf Figur 11 bis Figur 19 näher beschrieben.

Ferner weist der Dübel 100 als zweiten Endabschnitt, der dem Fuß 102 gegenüberliegt, einen kappenförmigen Kopf 108 am Einsteckende des Dübels 100 auf. Der kappenförmige und daher an sich geschlossene Kopf 108 weist in einer distalen Stirnplatte eine Sollbruchstelle 120 in Form einer linienhaften und im dargestellten Ausführungsbeispiel kreuzförmig ausgebildeten mechanischen Schwächungslinie auf. Bei Einbringen eines Befestigungselements 106, insbesondere bei Einschrauben einer Schraube, in die Öffnung 104 bzw. den zugehörigen Aufnahmekanal 130 des Dübels 100 wird die Sollbruchstelle 120 von der Spitze des Befestigungselements 106 unter Öffnung der Stirnfläche des Kopfes 108 aufgebrochen. Anders ausgedrückt kann ein Ende des Befestigungselements 106 die Sollbruchstelle 120 definiert zerstören und dadurch durch den Kopf 108 des Dübels 100 hindurchtreten (vergleiche Figur 9 und Figur 10).

Ferner weist der Kopf 108 in einem hohlzylindrischen Abschnitt Dehnungsfugen 122 auf (siehe Figur 3), die mit Rippen 124 gefüllt sind (siehe Figur 1 und Figur 2). Die Rippen 124 sind aus demselben Material und in demselben Herstellungsverfahren ausgebildet wie die ersten Spreizstege 112. Ein Teil der Rippen 124 erstreckt sich orthogonal zu der Axialrichtung des Dübels 100. Ein anderer Teil der Rippen 124 in den Dehnungsfugen 122 verläuft in einem spitzen Winkel schräg zu der Axialrichtung des Dübels 100.

Darüber hinaus ist ein Spreizbereich 110 zwischen dem Fuß 102 und dem Kopf 108 angeordnet und mit einer Mehrzahl von in Umfangsrichtung bündig bzw. unmittelbar aneinander anliegenden, aber getrennten Spreizstegen 112, 114 versehen. Der Spreizbereich 110 ist jener Bereich des Dübels 100, der nach Einbringen des Dübels 100 in einen als Vollkörper ausgebildeten Untergrund 118 (siehe Figur 9) und nach Einbringen eines als Schraube ausgebildeten Befestigungselements 106 (siehe ebenfalls Figur 9) in die Öffnung 104 radial aufgeweitet wird und dabei aufspreizt. Hingegen erfährt weder der Fuß 102 noch der Kopf 108 bei der Montage des Dübels 100 samt Befestigungselement 106 eine Spreizung. Eine gewisse Spreizung am Kopf 108 des Dübels 100 entsteht durch das Einbringen des Befestigungselements 106, insbesondere einer Schraube.

Erste Spreizstege 112 der ersten Spritzgusskomponente 170 sind, wie in Figur 1 und Figur 2 dargestellt, zwar kopfseitig und fußseitig miteinander verbunden, sind jedoch nicht mit zweiten Spreizstegen 114 der zweiten Spritzgusskomponente 180 verbunden. Die zweiten Spreizstege 114 sind sowohl am Fuß 102 als auch am Kopf 108 miteinander verbunden und sind einstückig und einstoffig mit bzw. als Teil einer zusammenhängenden Matrix 116 ausgebildet, wie in Figur 1 und Figur 3 dargestellt.

Die ersten Spreizstege 112 und die zweiten Spreizstege 114 können wahlweise aus unterschiedlichen Materialien oder aus dem gleichen Material hergestellt sein, wobei diese Materialien in zwei getrennten und aufeinanderfolgenden Spritzgussverfahren zum Einsatz kommen. Im dargestellten Ausführungsbeispiel sind die ersten Spreizstege 112 flexibler ausgebildet als die zweiten Spreizstege 114. Anders ausgedrückt sind die zweiten Spreizstege 114 im Vergleich zu den ersten Spreizstegen 112 rigider ausgebildet. Zum Beispiel können die zweiten Spreizstege 114 aus einem Hartkunststoff oder einem faserverstärkten Kunststoff hergestellt sein. Die ersten Spreizstege 112 hingegen können aus einem Weichkunststoff hergestellt sein, zum Beispiel Polyethylen.

Wie in Figur 1 und Figur 6 zu erkennen, sind die ersten Spreizstege 112 und die zweiten Spreizstege 114 in Umfangsrichtung alternierend angeordnet. Im dargestellten Ausführungsbeispiel gibt es vier erste Spreizstege 112 und vier zweite Spreizstege 114, wobei eine andere Anzahl erster Spreizstege 112 bzw. zweiter Spreizstege 114 möglich ist. Die ersten Spreizstege 112 und die zweiten Spreizstege 114 sind zueinander mit Berührkontakt und formschlüssig ausgebildet, aber bilden voneinander getrennte Körper, die auch getrennt voneinander aufspreizen können. Zum Beispiel Figur 6 kann entnommen werden, dass der Spreizbereich 110 in Umfangsrichtung spaltfrei geschlossen ist. Dies wird erreicht, indem jeweils benachbarte erste Spreizstege 112 und zweite Spreizstege 114 aneinander mit physischem Kontakt anliegen, ohne dazwischen Zwischenräume oder Schlitze zu bilden. Anschaulich ist mittels Spritzgießens eine zusammenhängende Matrix 116 gebildet, welche auch die zweiten Spreizstege 114 enthält. Die ersten Spreizstege 112 bilden nicht Teil der Matrix 116, sind aber abschnittsweise in Aussparungen der Matrix 116 positioniert.

Figur 1 und Figur 4 kann entnommen werden, dass die ersten Spreizstege 112 und die zweiten Spreizstege 114 miteinander verzahnt sind. Zueinander invers geformte Zahnstrukturen der Spreizstege 112, 114 sind derart konfiguriert, dass in Axialrichtung (die einer Einführrichtung eines Befestigungselements 106 in die Öffnung 104 des Dübels 100 entspricht und senkrecht zu einer Papierebene gemäß Figur 5 bis Figur 7 verläuft) des Dübels 100 abwechselnd breitere Abschnitte 140 und schmälere Abschnitte 142 gebildet sind. Dies ist zum Beispiel in Figur 4 zu erkennen.

Im Spreizbereich 110 und gegebenenfalls im Kopf 108, vorzugsweise jedoch nicht im Bereich des Fußes 102, ist ein hohler und sich an die Öffnung 104 anschließender Aufnahmekanal 130 zum Aufnehmen eines Befestigungselements 106 im Inneren des Dübels 100 ausgebildet. Wie am besten in Figur 6 dargestellt, hat der Aufnahmekanal 130 mehrere innenseitig hineinragende Überstände 132, die als innenseitige Endbereiche der ersten Spreizstege 112 ausgebildet sind. Wird das Befestigungselement 106 in die Öffnung 104 und nachfolgend den Aufnahmekanal 130 eingeführt, drückt das Befestigungselement 106 die Überstände 132 radial nach außen, wodurch die ersten Spreizstege 112 und dann auch die zweiten Spreizstege 114 nach außen auf eine Bohrlochwandung in dem Untergrund 118 aufgespreizt und aufgepresst werden.

Figur 2 zeigt anschaulich das Ergebnis des ersten Spritzgussprozesses, mit dem die erste Spritzgusskomponente 170 gefertigt wird. In Figur 2 ist zu erkennen, dass die vier ersten Spreizstege 112 am Kopf 108 und am Fuß 112 miteinander verbunden sind. Eine Verbindungsstruktur 176 dient als Füllmaterial bei einer Verwendung des Dübels 100 als Vollbaustoffeinsatz und bildet teilweise einen Rand bzw. eine Unterlage für einen nachfolgenden zweiten Spritzgussprozess.

Figur 3 stellt die zweite Spritzgusskomponente 180 als Ergebnis des zweiten Spritzgussprozesses isoliert dar, d.h. ohne Darstellung der ersten Spritzgusskomponente 170. Die vier zweiten Spreizstege 114 sind ebenfalls am Kopf 108 und am Fuß 112 miteinander verbunden, nicht aber mit den ersten Spreizstegen 112. Figur 3 zeigt die Dehnungsfugen 122, die sowohl ein radiales Aufspreizen fördern als auch ein leichteres Einbringen einer Schraube als Befestigungselement 106 ermöglichen. Ein Teil dieser Dehnungsfugen 122 ist schräg zu einer Axialrichtung des Dübels 100 ausgerichtet, was eine Aufweitung im Durchmesser ermöglicht. Entsprechende Stege können beim Einschrauben in axialer Richtung geformt werden.

Der in Figur 4 dargestellte fertige Dübel 100 enthält die ersten Spreizstege 112 als Teil der ersten Spritzgusskomponente 170 und die zweiten Spreizstege 114 als Teil der anderen zweiten Spritzgusskomponente 180. Zwischen den ersten Spreizstegen 112 und den zweiten Spreizstegen 114 ist keine mechanische Verbindung gebildet.

Zum Herstellen des Dübels 100 kann zunächst die erste Spritzgusskomponente 170 gemäß Figur 2 durch ein erstes Spritzgussverfahren unter Verwendung eines ersten Spritzgusswerkzeugs hergestellt werden. Dabei werden auch die ersten Spreizstege 112 gebildet. Nachfolgend kann die zweite Spritzgusskomponente 180 gemäß Figur 3 durch einen zweites Spritzgussverfahren unter Verwendung eines zweiten Spritzgusswerkzeugs hergestellt werden, wodurch auch die zweiten Spreizstege 114 gebildet werden. Hierbei kann die erste Spritzgusskomponente 170 durch die zweite Spritzgusskomponente 180 überspritzt werden. Als Ergebnis werden die Spreizstege 112, 114 enthalten, die zwar mit Berührkontakt aneinander anliegen, aber getrennte Körper sind, die bei Einbringen eines Befestigungselements 106 in den Dübel 100 auch getrennt voneinander aufspreizen können.

In Figur 7 und in Figur 8 zu erkennen sind Spreizdorne 174 an den ersten Spreizstegen 112. Die Spreizdorne 174 erstrecken sich in die Öffnung 104 bzw. bis in den Aufnahmekanal 130 hinein.

**Figur 9** zeigt schematisch einen Dübel 100 gemäß einem exemplarischen Ausführungsbeispiel der Erfindung (zum Beispiel den in Figur 1 bis Figur 8 gezeigten Dübel 100), bei dem die Spreizstege 112, 114 in einem als Vollkörper ausgebildeten Untergrund 118 aufgespreizt sind.

Genauer gesagt stellt Figur 9 eine Montageanordnung 136 gemäß einem exemplarischen Ausführungsbeispiel der Erfindung dar, die einen als Vollkörper (zum Beispiel Vollbeton) ausgebildeten Untergrund 118 und ein Montagekit 134 gemäß einem exemplarischen Ausführungsbeispiel der Erfindung zeigen. Das Montagekit 134 enthält den bezugnehmend auf Figur 1 bis Figur 8 beschriebenen Dübel 100 und eine Metallschraube als Befestigungselement 106 zum Einführen in den Dübel 100.

Zum Montieren des Dübels 100 in dem als Vollkörper ausgebildeten Untergrund 118 wird in dem Untergrund 118 zunächst ein Sackloch gebohrt. Danach wird, beispielsweise händisch oder mittels eines nicht dargestellten Hammers, der Dübel 100 in das Sackloch eingeführt. Nachfolgend wird mittels eines Schraubendrehers 178 das als Schraube ausgebildete Befestigungselement 106 in die Öffnung 104 und dann in den Aufnahmekanal 130 eingeschraubt. Dadurch erfolgt ein vollumfängliches und in Umfangsrichtung lückenloses Aufspreizen der Spreizstege 112, 114 des Dübels 100 gegen die Wandung des Sacklochs. Wie oben beschrieben, sind die Spreizstege 112, 114 ausgebildet, bei Einführen des Befestigungselements 106 in den als Vollkörper ausgebildeten Untergrund 118 gemeinsam aufzuspreizen.

Durch das oben beschriebene Herstellungsverfahren bzw. die Eigenschaften des Dübels 100 verbleiben im Spreizbereich 110 keine Hohlräume ohne Kunststoff zwischen Befestigungselement 106 und der Wandung des Sacklochs. Da sich solche Hohlräume auf das Spreizverhalten negativ auswirken, können mit dem beschriebenen Dübel 100 und dem zugehörigen Setzverfahren hohe Auszugskräfte erhalten werden.

Gemäß Figur 9 werden der Dübel 100 und das Befestigungselement 106 verwendet, um ein Anbauteil 186 an dem Untergrund 118 zu montieren.

**Figur 10** zeigt denselben Dübel 100 wie gemäß Figur 9 in einem Betriebszustand, in dem die Spreizstege 112, 114 in einem als Hohlkörper ausgebildeten anderen Untergrund 118 verknotet sind. Wenn nämlich der Untergrund 118, in den der Dübel 100 gesetzt wird, ein Hohlkörper ist, verknoten die Spreizstege 112, 114 des Dübels 100 in einem Hohlraum 184 des Hohlkörpers. Im dargestellten Ausführungsbeispiel ist der Untergrund 118 aus einer Platte 182 (zum Beispiel aus Gips oder Holz) gebildet, hinter der ein Hohlraum 184 angeordnet ist.

Somit ist der Dübel 100 ausgebildet, bei Eindrehen des Befestigungselements 106 in den als Hohlkörper ausgebildeten Untergrund 118 die Spreizstege 112, 114 des eingeführten Dübel 100 miteinander zu verknoten, wenn die Spreizstege 112, 114 in den Hohlraum 184 hinter der Platte 186 eindringen.

Der als Kunststoffdübel ausgebildete Dübel 100 gemäß Figur 1 bis Figur 8 ermöglicht somit wahlweise eine Verankerung durch Verspreizen in Vollbaustoffen (siehe Figur 9) und durch Verknoten in Hohlbaustoffen oder Plattenmaterialien (siehe Figur 10). Gleichzeitig gilt, dass harte und/oder steife Kunststoffe besonders gut für ein Verspreizen dienen und weiche und/oder elastische Kunststoffe besonders wirksam ein Verknoten fördern. Dicke Spreizstege 112 bzw. 114 mit großer Anlagefläche sind optimal für Vollbaustoffe. Hingegen sind dünne Spreizelemente 112 bzw. 114 besonders gut zum leichten Verknoten in Hohlbaustoffen geeignet.

**Figur 11** zeigt eine Seitenansicht eines Dübels 100 gemäß einem anderen Ausführungsbeispiel der Erfindung mit elastisch gelagerter Mitdrehsicherung 126. **Figur 12** zeigt eine Querschnittsansicht des Dübels 100 gemäß Figur 11. **Figur 13** zeigt eine räumliche Ansicht des Dübels 100 gemäß Figur 11.

Der Fuß 102 des Dübels 100 gemäß Figur 11 bis Figur 13 weist an seiner ersten Komponente 170 daran in Umfangsrichtung ausgebildete elastisch gelagerte Mitdrehsicherungen 126 auf. Die mit der ersten Komponente 170 verbundene zweite Komponente 180 ist derart konfiguriert, dass die zweite Komponente 180 Fenster aufweist, welche die Mitdrehsicherungen 126 nach außen hin freilegen. Dadurch können die Mitdrehsicherungen 126 außenseitig an den umgebenden Untergrund 118 angedrückt werden, wenn der Dübel 100 in ein Bohrloch eingeführt wird. Gleichzeitig sind die Mitdrehsicherungen 126 auch dübelinnenseitig freigelegt, d.h. stehen in unmittelbarem Wirkkontakt mit einem Befestigungselement 106, wenn dieses durch die Öffnung 104 in den Dübel 100 eingeführt wird. Dabei sind die Mitdrehsicherungen 126 so ausgebildet, dass jeweils ein stegförmiger außenseitiger Überstand 128 der jeweiligen Mitdrehsicherung 126 in einem kraftfreien Zustand in radialer Richtung über eine Dübelhülse nach außen hin übersteht. Die zylindrische Dübelhülse entspricht daher Abschnitten der Komponenten 170, 180 im Bereich des Fußes 102. Jede Mitdrehsicherung 126 ist aus einem plättchenförmigen Grundkörper 169 (der einen Teil der ersten Komponente 170 bildet) mit einem daran außenseitig aufgebrachten Überstand 128 (der ebenfalls einen Teil der ersten Komponente 170 bildet) ausgebildet.

Jede der Mitdrehsicherungen 126 ist so ausgebildet, dass sich der jeweils zugehörige außenseitige Überstand 128 der jeweiligen Mitdrehsicherung 126 bei Einführen des Dübels 100 in ein Bohrloch in einem Untergrund 118 in radialer Richtung elastisch federnd nach innen bewegt. Anschaulich drückt das umgebende Material des Untergrunds 118 die jeweilige Mitdrehsicherung 126 radial nach innen, wodurch ein werkzeugfreies und zerstörungsfreies Eindrücken des Dübels 100 in den Untergrund 118 durch einen Benutzer ermöglicht wird. Ferner ist jede der Mitdrehsicherungen 126 so ausgebildet, dass sich der jeweilige außenseitige Überstand 128 der jeweiligen Mitdrehsicherung 126 bei einem drehenden Einführen eines insbesondere als Schraube ausgebildeten Befestigungselements 106 in die Öffnung 104 des in dem Bohrloch befindlichen Dübels 100 in jeweils radialer Richtung wieder nach außen bewegt, vorzugsweise ebenfalls elastisch.

Dies bedeutet, dass ein Benutzer von Hand den Dübel 100 in das Bohrloch in dem Untergrund 118 einführen kann, da sich die Mitdrehsicherungen 126 dann elastisch nach innen zurückziehen und ein kraftarmes Einführen des Dübels 100 in das Bohrloch ermöglichen. Dennoch kann eine wirksame Verdrehsicherung des Dübels 100 beim nachfolgenden drehenden Einbringen (zum Beispiel Einschrauben) des (zum Beispiel als Schraube ausgebildeten) Befestigungselements 106 sichergestellt werden. Das Befestigungselement 106 drückt von der Öffnung 104 aus die elastisch gelagerten Mitdrehsicherungen 126 wieder zurück nach außen und daher gegen den Untergrund 118. Dadurch wird der Verdrehschutz der Mitdrehsicherungen 126 ohne zusätzliche Benutzeraktivität aktiviert.

Mit Vorteil ist jede der Mitdrehsicherungen 126 ferner so ausgebildet, dass ein jeweiliger innenseitiger Überstand 129 einer jeden der Mitdrehsicherungen 126 in radialer Richtung gegenüber der Dübelhülse nach innen übersteht. Jede Mitdrehsicherung 126 hat somit an ihrem plättchenförmigen Grundkörper 169 innenseitig einen jeweiligen Überstand 129. Anschaulich sorgt der jeweilige innenseitige Überstand 129 dafür, dass beim Eindrehen des Befestigungselements 106 die Mitdrehsicherungen 126 verstärkt nach außen gedrückt werden und sich dadurch die Drehsicherung besonders wirksam und schnell entfalten kann.

Jede der Mitdrehsicherungen 126 kann in Einführrichtung eines Befestigungselements 106 in den Dübel 100 und somit in axialer Richtung des Dübels 100 vorderseitig und rückseitig fest an einem jeweiligen Verbindungsring 187 bzw. 189 der ersten Komponente 170 gelagert sein. Ferner sind die Mitdrehsicherungen 126 jeweils seitlich - bezogen auf die Einführrichtung eines Befestigungselements 106 in den Dübel 100 bzw. auf die axiale Richtung des Dübels 100 - von der zweiten Komponente 180 und auch von Restmaterial ersten Komponente 170 getrennt. Von der zweiten Komponente 180 sind die Mitdrehsicherungen 126 auch vorder- und rückseitig getrennt und grenzen vorder- und rückseitig lediglich an die zweite Komponente 180 an. Diese integrale Ankopplung an die erste Komponente 170 und Trennung von der zweiten Komponente 180 bewirkt gleichzeitig eine ausreichend feste Lagerung der Mitdrehsicherungen 126 am Dübelkörper in Längsrichtung und eine kraftarme elastische Deformierbarkeit der Mitdrehsicherungen 126 durch eine Freistellung in Querrichtung.

Wie in Figur 11 bis Figur 13 ferner gezeigt, bilden die erste Komponente 170 und die zweite Komponente 180 im Bereich der Mitdrehsicherung 126 einen umfänglich im Wesentlichen geschlossenen Schaft, der lediglich minimal im Bereich der Freistellung in Querrichtung geöffnet sein kann (vergleiche Figur 18). Dies verleiht dem Dübel 100 große mechanische Stabilität und erlaubt trotzdem das Ausbilden von Mitdrehsicherungen 126.

Die erste Komponente 170 ist eine erste Spritzgusskomponente und die zweite Komponente 180 ist eine zweite Spritzgusskomponente, die über die erste Spritzgusskomponente überspritzt ist. Mit Vorteil kann die zweite Komponente 180 aus einem Material mit höherer Festigkeit oder Härte und höherem Elastizitätsmodul ausgebildet werden als ein Material der ersten Komponente 170. Dann kann die zweite Komponente 180 die Stabilität des Dübels 100 garantieren, während die erste Komponente 170 die elastische Deformierbarkeit einer Lagerung der Mitdrehsicherung 126 bewirkt.

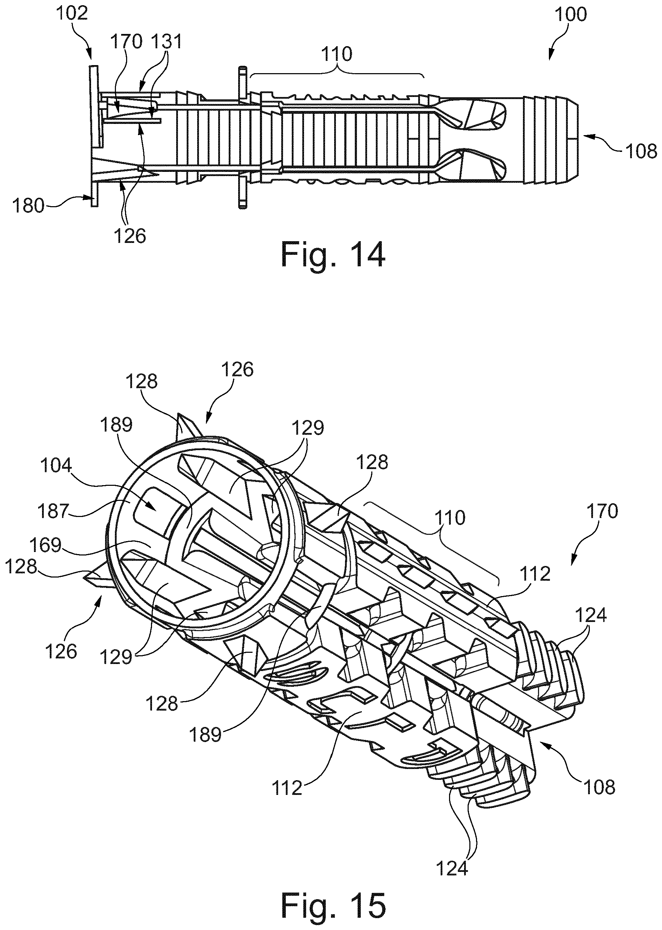

**Figur 14** zeigt eine Seitenansicht eines Dübels 100 gemäß einem anderen Ausführungsbeispiel der Erfindung mit elastisch gelagerter Mitdrehsicherung 126. Gemäß Figur 14 sind Aussparungen 131 als Federelement einer Mitdrehsicherung 126 gebildet.

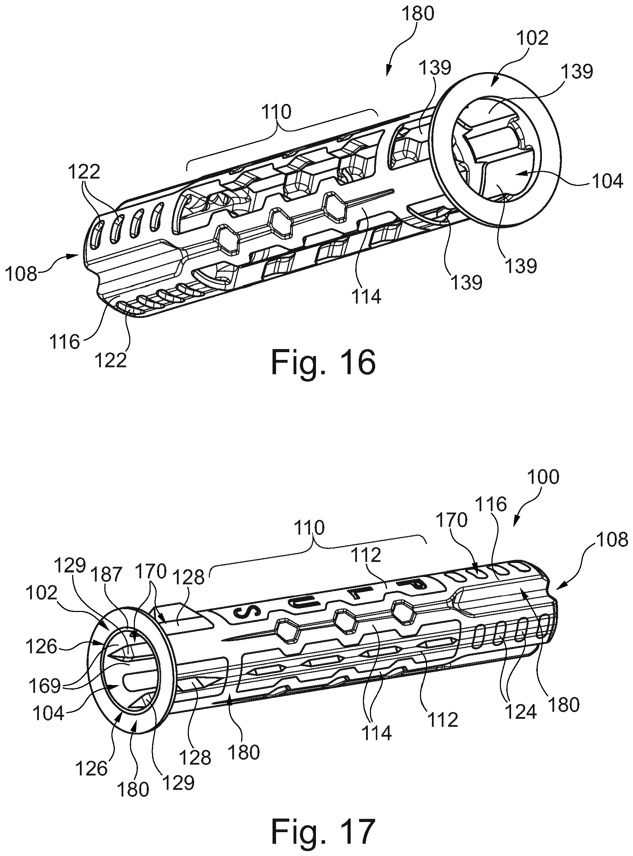

**Figur 15** zeigt eine dreidimensionale Ansicht einer ersten Spritzgusskomponente eines Dübels 100 gemäß einem exemplarischen Ausführungsbeispiel der Erfindung, wobei diese erste Komponente 170 elastisch gelagerte Mitdrehsicherungen 126 bereitstellt. **Figur 16** zeigt eine zweite Komponente 180 des Dübels 100, die als zweite Spritzgusskomponente ausgebildet ist und Aussparungen 139 zum jeweiligen Freistellen einer jeweiligen der Mitdrehsicherungen 126 der ersten Komponente 170 aufweist, wenn die zweite Komponente 180 über der ersten Komponente 170 gebildet ist. **Figur 17** zeigt eine dreidimensionale Ansicht des Dübels 100 mit elastisch gelagerter Mitdrehsicherung 126, der aus der in Figur 15 dargestellten ersten Komponente 170 und der in Figur 16 dargestellten zweiten Komponente 180 gebildet ist.

Zum Herstellen des Dübels 100 kann in einem Spritzgusswerkzeug zunächst die erste Komponente 170 mittels Spritzgießens gebildet werden. Danach kann die erste Komponente 170 in ein anderes Spritzgusswerkzeug eingeführt werden und nachfolgend mit der zweiten Komponente 180 überspitzt werden. Für die beiden Spritzgussverfahren können dieselben oder unterschiedliche Materialien verwendet werden.

Wie insbesondere in Figur 15 und Figur 17 zu erkennen ist, können bei dem Dübel 100 die mehreren Mitdrehsicherungen 126 dübelfußseitig (d.h. an einem axialen Ende der Mitdrehsicherungen 126, das dem Dübelfuß 102 am nächsten ist) miteinander verbunden sein. Dies ist durch einen in Figur 15 und Figur 17 dargestellten Verbindungsring 187 der ersten Komponente 170 erreichbar. In entsprechender Weise können die mehreren Mitdrehsicherungen 126 dübelkopfseitig (d.h. an einem gegenüberliegenden axialen Ende der Mitdrehsicherungen 126, das dem Dübelkopf 108 am nächsten ist) ebenfalls miteinander verbunden sein. Dies ist durch einen in Figur 15 dargestellten weiteren Verbindungsring 189 der ersten Komponente 170 erreichbar. Am dübelkopfseitigen Ende kann jede der Mitdrehsicherungen 126 ferner mit einem jeweiligen Spreizsteg 112 der ersten Komponente 170 verbunden sein.

**Figur 18** zeigt einen Teilbereich einer Außenwandung eines Dübels 100 mit elastisch gelagerter Mitdrehsicherung 126 gemäß einem exemplarischen Ausführungsbeispiel der Erfindung. **Figur 19** zeigt eine Querschnittsansicht des Teilbereichs gemäß Figur 18 entlang einer in Figur 18 dargestellte Schnittlinie A-A.

Insbesondere kann Figur 18 und Figur 19 entnommen werden, wie der die Mitdrehsicherung 126 bildende Abschnitt der ersten Komponente 170 zum Teil von der zweiten Komponente 180 überlagert ist und zu einem anderen Teil gegenüber der zweiten Komponente 180 freigestellt ist. Die axiale Richtung des Dübels 100 bzw. die Einführrichtung des Befestigungselements 106 in die Öffnung 104 des Dübels 100 ist in Figur 18 und Figur 19 mit Bezugszeichen 195 veranschaulicht. Insbesondere ist in Figur 18 und Figur 19 zu erkennen, dass an Materialschnittstellen 191, 191 zwischen den Komponenten 170, 180 am in axialer Richtung 195 vorderseitigen Ende und hinterseitigen Ende der Mitdrehsicherung 126 die Mitdrehsicherung 126 mit angrenzendem anderen Material der ersten Komponente 170 verbunden ist. Im Gegensatz dazu ist in einer seitlichen Richtung, d.h. in einer Richtung senkrecht zur Einführrichtung gemäß Bezugszeichen 195, die Mitdrehsicherung 126 von anderen Material der Komponente 170 und der Komponente 180 getrennt ausgebildet. Dies ist in Figur 18 durch schmale Beabstandungsschlitze oder Engspalte 193 dargestellt. Vorteilhaft sind die Engspalte 193 so schmal ausgebildet, dass in Umfangsrichtung des Dübels 100 dieser ungeachtet der Engspalte 193 eine im Wesentlichen geschlossene Umfangsfläche aufweist. Zum Beispiel kann in Umfangsrichtung des Dübels 100 die Dübelhülse über mindestens 90 %, insbesondere über mindestens 95 %, weiter insbesondere über mindestens 99 %, des Umfangs geschlossen sein. Aufgrund des Vorsehens der Engspalte 193 in Verbindung mit nachgiebiger bzw. elastischer Lagerung der Komponente 170 ist es der Mitdrehsicherung 126 ermöglicht, bei (einem zum Beispiel händischen bzw. werkzeugfreien) Einstecken des Dübels 100 in ein Bohrloch in Untergrund 118 die außenseitigen Überstände 128 federnd und reversibel nach innen zu verschieben, ohne dass eine plastische Deformation auftritt (vergleiche Bezugszeichen 197). Wenn nachfolgend ein Befestigungselement 106 in die Öffnung 104 eingebracht wird, ist es der Mitdrehsicherung 126 ermöglicht, durch Einwirkung auf die innenseitigen Überstände 129 federnd und reversibel nach außen verschoben zu werden, ohne dass eine plastische Deformation auftritt (vergleiche Bezugszeichen 199).

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Dübel (100), aufweisend:
eine erste Komponente (170) mit einer elastisch gelagerten Mitdrehsicherung (126) ;
eine an der ersten Komponente (170) angeordnete zweite Komponente (180), wobei die zweite Komponente (180) ein Fenster aufweist, welches die Mitdrehsicherung (126) nach außen hin freilegt; und
eine Öffnung (104) zum Einführen eines Befestigungselements (106);
wobei mindestens eine der Komponenten (170, 180) Spreizstege (112, 114) bildet.

2. Dübel (100) gemäß Anspruch 1, wobei die Mitdrehsicherung (126) so ausgebildet ist, dass mindestens ein dübelaußenseitiger Überstand (128), insbesondere ausgebildet als Steg, weiter insbesondere ausgebildet als Längssteg, der Mitdrehsicherung (126) in einem kraftfreien Zustand in radialer Richtung über eine Dübelhülse nach außen übersteht.

3. Dübel (100) gemäß Anspruch 2, wobei die Mitdrehsicherung (126) so ausgebildet ist, dass sich der mindestens eine dübelaußenseitige Überstand (128) der Mitdrehsicherung (126) bei Einführen des Dübels (100) in ein Bohrloch in einem Untergrund (118) in radialer Richtung elastisch nach innen bewegt.

4. Dübel (100) gemäß Anspruch 3, wobei die Mitdrehsicherung (126) so ausgebildet ist, dass sich der mindestens eine dübelaußenseitige Überstand (128) der Mitdrehsicherung (126) bei Einführen eines Befestigungselements (106) in eine Öffnung (104) des in dem Bohrloch befindlichen Dübels (100) in radialer Richtung nach außen bewegt.

5. Dübel (100) gemäß einem der Ansprüche 1 bis 4, wobei die Mitdrehsicherung (126) so ausgebildet ist, dass mindestens ein dübelinnenseitiger Überstand (129) der Mitdrehsicherung (126) in radialer Richtung über eine Dübelhülse nach innen übersteht und mindestens einem dübelaußenseitigen Überstand (128) der Mitdrehsicherung (126) derart zugeordnet ist, dass bei Einführen eines Befestigungselements (106) in eine Öffnung (104) des Dübels (100) das Befestigungselement (106) den mindestens einen dübelinnenseitigen Überstand (129) nach außen drückt und dadurch die Mitdrehsicherung (126) aktiviert.

6. Dübel (100) gemäß einem der Ansprüche 1 bis 5, aufweisend zumindest eines der folgenden Merkmale:
wobei die Mitdrehsicherung (126) in Einführrichtung (195) eines Befestigungselements (106) in eine Öffnung (104) in dem Dübel (100) axial vorderseitig und/oder rückseitig an Material der ersten Komponente (170), insbesondere an einem vorderseitigen Verbindungsring (189) und/oder an einem rückseitigen Verbindungsring (187), gelagert ist;
wobei die Mitdrehsicherung (126) seitlich, bezogen auf eine Einführrichtung (195) eines Befestigungselements (106) in eine Öffnung (104) in dem Dübel (100), von der zweiten Komponente (180) getrennt ist, insbesondere durch einen Engspalt (193) seitlich beanstandet ist;
wobei die Mitdrehsicherung (126) axial vorderseitig und/oder rückseitig, bezogen auf eine Einführrichtung (195) eines Befestigungselements (106) in eine Öffnung (104) in dem Dübel (100), an der zweiten Komponente (180) anliegt;
wobei die Mitdrehsicherung (126) separat von der zweiten Komponente (180) ausgebildet ist.

7. Dübel (100) gemäß einem der Ansprüche 1 bis 6, wobei die erste Komponente (170) entlang eines Umfangs des Dübels (100) mit mehreren elastisch gelagerten Mitdrehsicherungen (126), insbesondere jeweils mit den Merkmalen gemäß einem der Ansprüche 1 bis 6, versehen ist,
wobei insbesondere die mehreren Mitdrehsicherungen (126) dübelfußseitig miteinander verbunden sind, insbesondere über einen Verbindungsring (187) miteinander verbunden sind, und/oder wobei die mehreren Mitdrehsicherungen (126) dübelkopfseitig miteinander verbunden sind, insbesondere über einen Verbindungsring (189) miteinander verbunden sind, und insbesondere mit einem jeweiligen Spreizsteg (112) der ersten Komponente (170) verbunden sind.

8. Dübel (100) gemäß einem der Ansprüche 1 bis 7, aufweisend zumindest eines der folgenden Merkmale:
wobei die erste Komponente (170) und die zweite Komponente (180) zumindest im Bereich der Mitdrehsicherung (126) eine umfänglich im Wesentlichen geschlossene Dübelhülse bilden;
wobei die erste Komponente (170) eine erste Spritzgusskomponente und die zweite Komponente (180) eine separate zweite Spritzgusskomponente ist, wobei insbesondere die erste Spritzgusskomponente von der zweiten Spritzgusskomponente zumindest teilweise überspritzt ist;
wobei die zweite Komponente (180) aus einem anderen Material, insbesondere aus einem Material mit höherer Festigkeit und/oder mit einem größeren Elastizitätsmodul, ausgebildet ist als ein Material der ersten Komponente (170).

9. Dübel (100) gemäß einem der Ansprüche 1 bis 8, aufweisend:
einen Fuß (102) mit einer Öffnung (104) zum Einführen eines Befestigungselements (106), wobei insbesondere die mindestens eine Mitdrehsicherung (126) am Fuß (102) angeordnet ist;
einen Kopf (108); und
einen Spreizbereich (110) zwischen dem Fuß (102) und dem Kopf (108);
wobei insbesondere der Spreizbereich (110) mit einer Mehrzahl von in Umfangsrichtung bündig aneinander anliegenden, aber getrennten Spreizstegen (112, 114) ausgebildet ist, wobei weiter insbesondere die Spreizstege (112, 114) erste Spreizstege (112) und zweite Spreizstege (114) aufweisen, wobei die ersten Spreizstege (112) am Fuß (102) und/oder am Kopf (108) miteinander verbunden sind und/oder wobei die zweiten Spreizstege (114) am Fuß (102) und/oder am Kopf (108) miteinander verbunden sind.

10. Dübel (100) gemäß Anspruch 9, aufweisend zumindest eines der folgenden Merkmale:
wobei die ersten Spreizstege (112) nicht mit den zweiten Spreizstegen (114) verbunden sind, insbesondere nicht am Kopf (108) und/oder nicht am Fuß (102) und/oder nicht zwischen Kopf (108) und Fuß (102);
wobei die ersten Spreizstege (112) und die zweiten Spreizstege (114) aus unterschiedlichen Materialien oder aus dem gleichen Material hergestellt sind;
wobei die ersten Spreizstege (112) und die zweiten Spreizstege (114) in Umfangsrichtung alternierend angeordnet sind;
wobei die ersten Spreizstege (112) und die zweiten Spreizstege (114) zueinander formschlüssig ausgebildet sind;
wobei die ersten Spreizstege (112) dünner und aus einem festeren Material als die zweiten Spreizstege (114) ausgebildet sind oder die zweiten Spreizstege (114) dünner und aus einem festeren Material als die ersten Spreizstege (112) ausgebildet sind;
wobei die ersten Spreizstege (112) Teil der ersten Komponente (170), insbesondere einer ersten Spritzgusskomponente, des Dübels (100) sind und die zweiten Spreizstege (114) Teil der zweiten Komponente (180), insbesondere einer zweiten Spritzgusskomponente, des Dübels (100) sind;
wobei die ersten Spreizstege (112) und die zweiten Spreizstege (114) eine unterschiedliche Flexibilität oder Elastizität aufweisen;
wobei die ersten Spreizstege (112) zumindest abschnittsweise von einer zusammenhängenden Matrix (116), welche auch die zweiten Spreizstege (114) aufweist, umfänglich umgeben sind;
wobei die ersten Spreizstege (112) und die zweiten Spreizstege (114) miteinander verzahnt sind;
wobei zumindest ein Teil der Spreizstege (112, 114) in Axialrichtung des Dübels (100) alternierend breitere Abschnitte (140) und schmälere Abschnitte (142) aufweist;
wobei der Spreizbereich (110) in Umfangsrichtung, insbesondere entlang einer gesamten axialen Länge des Spreizbereichs (110), spaltfrei geschlossen ist;
wobei die Spreizstege (112, 114) ausgebildet sind, bei Einführen eines Befestigungselements (106) in den, in einen als Vollkörper ausgebildeten Untergrund (118) eingeführten, Dübel (100) gemeinsam aufzuspreizen;
wobei die Spreizstege (112, 114) ausgebildet sind, bei Einführen eines Befestigungselements (106) in den, in einen als Hohlkörper ausgebildeten Untergrund (118) eingeführten, Dübel (100) miteinander zu verknoten;
wobei der Kopf (108) geschlossen ist, wobei insbesondere der Kopf (108) eine Sollbruchstelle (120) aufweist, die bei Einbringen eines Befestigungselements (106) in den Dübel (100) unter Öffnung des Kopfes (108) aufbrechbar ist;
wobei der Kopf (108) Dehnungsfugen (122) aufweist, die zumindest teilweise mit Rippen (124) gefüllt sind, wobei insbesondere zumindest ein Teil der Dehnungsfugen (122) schräg zu einer Axialrichtung des Dübels (100) verläuft;
wobei der Fuß (102) die Mitdrehsicherung (126) aufweist, insbesondere ausgebildet als in Umfangsrichtung außenseitig verteilt angeordnete Überstände (128);
wobei zumindest im Spreizbereich (110) ein Aufnahmekanal (130) zum Aufnehmen eines Befestigungselements (106) im Inneren des Dübels (100) mehrere innenseitig hineinragende Überstände (132) aufweist, die als innenseitige Endbereiche von zumindest einem Teil der Spreizelemente (112, 114) ausgebildet sind;
wobei der Kopf (108) und/oder der Fuß (102) ausgebildet ist oder sind, dass dort bei Einführen eines Befestigungselements (106) keine Spreizung erfolgt.

11. Montagekit (134), aufweisend:
einen Dübel (100) gemäß einem der Ansprüche 1 bis 10; und
ein Befestigungselement (106) zum Einführen in den Dübel (100).

12. Verfahren zum Herstellen eines Dübels, wobei das Verfahren aufweist:
Bilden einer ersten Komponente (170) mit einer elastisch gelagerten Mitdrehsicherung (126); und
Bilden einer an der ersten Komponente (170) angeordneten zweiten Komponente (180), wobei die zweite Komponente (180) ein Fenster aufweist, welches die Mitdrehsicherung (126) nach außen hin freilegt.

13. Verfahren zum Montieren eines Dübels (100) gemäß einem der Ansprüche 1 bis 10 in einem Untergrund (118), wobei das Verfahren aufweist:
Einführen des Dübels (100) in ein Bohrloch in dem Untergrund (118), wodurch sich mindestens ein außenseitiger Überstand der Mitdrehsicherung (126) in radialer Richtung nach innen bewegt.

14. Verfahren gemäß Anspruch 13, wobei das Verfahren aufweist:
nachfolgend Einbringen eines Befestigungselements (106) in den Dübel (100), wodurch sich der mindestens eine außenseitige Überstand der Mitdrehsicherung (126) in radialer Richtung nach außen bewegt.

## Claims

1. A wall plug (100) comprising:
a first component (170) with an elastically mounted co-rotation locking device (126);
a second component (180) which is arranged at the first component (170), wherein the second component (180) comprises a window which exposes the co-rotation locking device (126) to the outside; and
an opening (104) for inserting an attachment element (106);
wherein at least one of the components (170, 180) forms strutting bars (112, 114).

2. The wall plug (100) according to claim 1, wherein the co-rotation locking device (126) is configured such that at least one protrusion (128) at an outer side of the wall plug, in particular configured as a bar, further in particular configured as a longitudinal bar, of the co-rotation locking device (126) in a force-free state protrudes in a radial direction beyond a wall plug sleeve to the outside.

3. The wall plug (100) according to claim 2, wherein the co-rotation locking device (126) is configured such that the at least one protrusion (128) at the outer side of the wall plug of the co-rotation locking device (126) moves elastically inwardly in the radial direction when inserting the wall plug (100) in a drilling hole in an underground (118).

4. The wall plug (100) according to claim 3, wherein the co-rotation locking device (126) is configured such that the at least one protrusion (128) at the outer side of the wall plug of the co-rotation locking device (126) moves outwardly in the radial direction when inserting an attachment element (106) in an opening (104) of the wall plug (100) which is located in the drilling hole.

5. The wall plug (100) according to one of the claims 1 to 4, wherein the co-rotation locking device (126) is configured such that at least one protrusion (129) at an inner side of the wall plug of the co-rotation locking device (126) protrudes in the radial direction beyond a wall plug sleeve to the inside and is assigned to at least one protrusion (128) at the outer side of the wall plug of the co-rotation locking device (126) such that, when inserting an attachment element (106) in an opening (104) of the wall plug (100), the attachment element (106) pushes the at least one protrusion (129) at the inner side of the wall plug to the outside and therefore activates the co-rotation locking device (126).

6. The wall plug (100) according to one of the claims 1 to 5, comprising at least one of the following features:
wherein the co-rotation locking device (126) is mounted in an insertion direction (195) of an attachment element (106) in an opening (104) in the wall plug (100) axially at a front side and/or at a backside at material of the first component (170), in particular at a connection ring (189) at the front side and/or at a connection ring (187) at the backside;
wherein the co-rotation locking device (126), with respect to an insertion direction (195) of an attachment element (106) in an opening (104) in the wall plug (100), is laterally separated from the second component (180), in particular by a narrow gap (193);
wherein the co-rotation locking device (126) is axially abutting to the second component (180) at the front side and/or at the backside with respect to an insertion direction (195) of an attachment element (106) in an opening (104) in the wall plug (100);
wherein the co-rotation locking device (126) is formed separately from the second component (180).

7. The wall plug (100) according to one of the claims 1 to 6, wherein the first component (170) is provided with multiple elastically mounted co-rotation locking devices (126), in particular respectively with the features according to one of the claims 1 to 6, along a circumference of the wall plug (100),
wherein in particular the multiple co-rotation locking devices (126) are connected to each other at a side of a wall plug foot, in particular connected to each other via a connection ring (187), and/or wherein the multiple co-rotation locking devices (126) are connected to each other at a side of a wall plug head, in particular connected to each other via a connection ring (189), and in particular are connected to a respective strutting bar (112) of the first component (170).

8. The wall plug (100) according to one of the claims 1 to 7, comprising at least one of the following features:
wherein the first component (170) and the second component (180) at least in the region of the co-rotation locking device (126) are forming a wall plug sleeve which is circumferentially substantially closed;
wherein the first component (170) is a first injection molded component and the second component (180) is a separate second injection molded component, wherein in particular the first injection molded component is at least partially overmolded by the second injection molded component;
wherein the second component (180) is made of another material, in particular of a material with a higher strength and/or with a larger elastic modulus, than a material of the first component (170).

9. The wall plug (100) according to one of the claims 1 to 8, comprising:
a foot (102) with an opening (104) for inserting an attachment element (106), wherein in particular the at least one co-rotation locking device (126) is arranged at the foot (102);
a head (108); and
a strutting region (110) between the foot (102) and the head (108);
wherein in particular the strutting region (110) is formed with a multiplicity of strutting bars (112, 114) which are in the circumferential direction flushly abutting to each other, but separate, wherein further in particular the strutting bars (112, 114) comprise first strutting bars (112) and second strutting bars (114), wherein the first strutting bars (112) are connected to each other at the foot (102) and/or at the head (108), and/or wherein the second strutting bars (114) are connected to each other at the foot (102) and/or at the head (108).

10. The wall plug (100) according to claim 9, comprising at least one of the following features:
wherein the first strutting bars (112) are not connected to the second strutting bars (114), in particular not at the head (108) and/or not at the foot (102) and/or not between the head (108) and the foot (102);
wherein the first strutting bars (112) and the second strutting bars (114) are made of different materials or of the same material;
wherein the first strutting bars (112) and the second strutting bars (114) are alternatingly arranged in the circumferential direction;
wherein the first strutting bars (112) and the second strutting bars (114) are formed in a form-locking manner with respect to each other;
wherein the first strutting bars (112) are thinner and made of a stronger material than the second strutting bars (114), or the second strutting bars (114) are thinner and made of a stronger material than the first strutting bars (112);
wherein the first strutting bars (112) are a part of the first component (170), in particular of a first injection molded component, of the wall plug (100), and the second strutting bars (114) are a part of the second component (180), in particular of a second injection molded component, of the wall plug (100);
wherein the first strutting bars (112) and the second strutting bars (114) comprise a different flexibility or elasticity;
wherein the first strutting bars (112) are at least in portions circumferentially enclosed by a continuous matrix (116) which also comprises the second strutting bars (114);
wherein the first strutting bars (112) and the second strutting bars (114) are toothed with each other;
wherein at least a part of the strutting bars (112, 114) alternatingly comprises broader portions (140) and narrower portions (142) in an axial direction of the wall plug (100);
wherein the strutting region (110) is closed in a gap-free manner in the circumferential direction, in particular along an entire axial length of the strutting region (110);
wherein the strutting bars (112, 114) are configured to commonly spread apart when inserting an attachment element (106) in the wall plug (100) which is inserted in an underground (118) which is configured as a full body;
wherein the strutting bars (112, 114) are configured to knot with each other when inserting an attachment element (106) in the wall plug (100) which is inserted in an underground (118) which is configured as a hollow body;
wherein the head (108) is closed, wherein in particular the head (108) comprises a predetermined breaking point (120) which is breakable under opening the head (108) when inserting an attachment element (106) in the wall plug (100);
wherein the head (108) comprises expansion gaps (122) which are at least partially filled with fins (124), wherein in particular at least a part of the expansion gaps (122) is running inclinedly with respect to an axial direction of the wall plug (100);
wherein the foot (102) comprises the co-rotation locking device (126), in particular configured as protrusions (128) which are arranged in a distributed manner in the circumferential direction at an outer side;
wherein at least in the strutting region (110) a receiving channel (130) for receiving an attachment element (106) in an interior of the wall plug (100) comprises multiple protrusions (132) which are protruding into it at an inner side, which are configured as inner end regions of at least a part of the strutting elements (112, 114);
wherein the head (108) and/or the foot (102) is or are configured such that no spreading occurs there when inserting an attachment element (106).

11. Mounting kit (134) comprising:
a wall plug (100) according to one of the claims 1 to 10; and
an attachment element (106) for inserting in the wall plug (100).

12. A Method of manufacturing a wall plug, wherein the method comprises:
forming a first component (170) with an elastically mounted co-rotation locking device (126); and
forming a second component (180) which is arranged at the first component (170), wherein the second component (180) comprises a window which exposes the co-rotation locking device (126) to the outside.

13. A method of mounting a wall plug (100) according to one of the claims 1 to 10 in an underground (118), wherein the method comprises:
inserting the wall plug (100) in a drilling hole in the underground (118), wherein thereby at least one outer protrusion of the co-rotation locking device (126) moves inwardly in the radial direction.

14. The method according to claim 13, wherein the method comprises:
subsequently inserting an attachment element (106) in the wall plug (100), wherein thereby at least one outer protrusion of the co-rotation locking device (126) moves outwardly in the radial direction.

## Revendications

1. Goujon (100) présentant :
un premier composant (170) avec un dispositif antirotation (126) logé de manière élastique ;
un second composant (180) agencé au niveau du premier composant (170), dans lequel le second composant (180) présente une fenêtre qui expose le dispositif antirotation (126) vers l'extérieur ; et
une ouverture (104) pour l'introduction d'un élément de fixation (106) ;
dans lequel au moins un des composants (170, 180) forme des branches d'écartement (112, 114).

2. Goujon (100) selon la revendication 1, dans lequel le dispositif antirotation (126) est réalisé de sorte qu'au moins un élément en porte-à-faux (128) côté extérieur du goujon, en particulier réalisé comme traverse, plus particulièrement réalisé comme traverse longitudinale, du dispositif antirotation (126) dépasse dans l'état sans force dans le sens radial d'une douille de goujon vers l'extérieur.

3. Goujon (100) selon la revendication 2, dans lequel le dispositif antirotation (126) est réalisé de sorte que l'au moins un élément en porte-à-faux (128) côté extérieur du goujon du dispositif antirotation (126) se déplace lors de l'introduction du goujon (100) dans un trou foré dans un support (118) dans le sens radial élastiquement vers l'intérieur.

4. Goujon (100) selon la revendication 3, dans lequel le dispositif antirotation (126) est réalisé de sorte que l'au moins un élément en porte-à-faux (128) côté extérieur du goujon du dispositif antirotation (126) se déplace lors de l'introduction d'un élément de fixation (106) dans une ouverture (104) du goujon (100) se trouvant dans le trou foré dans le sens radial vers l'extérieur.

5. Goujon (100) selon l'une des revendications 1 à 4, dans lequel le dispositif antirotation (126) est réalisé de sorte qu'au moins un élément en porte-à-faux (129) côté intérieur du goujon du dispositif antirotation (126) dépasse dans le sens radial d'une douille de goujon vers l'intérieur et soit associé à au moins un élément en porte-à-faux (128) côté extérieur du goujon du dispositif antirotation (126) de telle manière que lors de l'introduction d'un élément de fixation (106) dans une ouverture (104) du goujon (100) l'élément de fixation (106) presse l'au moins un élément en porte-à-faux (129) côté intérieur du goujon vers l'extérieur et active ainsi le dispositif antirotation (126).

6. Goujon (100) selon l'une des revendications 1 à 5, présentant au moins une des caractéristiques suivantes :
dans lequel le dispositif antirotation (126) est logé dans le sens d'introduction (195) d'un élément de fixation (106) dans une ouverture (104) dans le goujon (100) axialement côté avant et/ou côté arrière au niveau du matériau du premier composant (170), en particulier au niveau d'un anneau de liaison (189) côté avant et/ou au niveau d'un anneau de liaison (187) côté arrière ;
dans lequel le dispositif antirotation (126) est séparé latéralement, par rapport à un sens d'introduction (195) d'un élément de fixation (106) dans une ouverture (104) dans le goujon (100), du second composant (180), en particulier est espacé latéralement par une fente étroite (193) ;
dans lequel le dispositif antirotation (126) repose axialement côté avant et/ou côté arrière, par rapport à un sens d'introduction (195) d'un élément de fixation (106) dans une ouverture (104) dans le goujon (100), contre le second composant (180) ;
dans lequel le dispositif antirotation (126) est réalisé séparément du second composant (180).

7. Goujon (100) selon l'une des revendications 1 à 6, dans lequel le premier composant (170) est pourvu le long d'une périphérie du goujon (100) de plusieurs dispositifs antirotation (126) logés de manière élastique, en particulier respectivement des caractéristiques selon l'une des revendications 1 à 6,
dans lequel en particulier les plusieurs dispositifs antirotation (126) sont reliés entre eux côté pied de goujon, en particulier sont reliés entre eux par le biais d'un anneau de liaison (187), et/ou dans lequel les plusieurs dispositifs antirotation (126) sont reliés entre eux côté tête de goujon, en particulier sont reliés entre eux par le biais d'un anneau de liaison (189), et en particulier sont reliés à une branche d'écartement (112) respective du premier composant (170).

8. Goujon (100) selon l'une des revendications 1 à 7, présentant au moins une des caractéristiques suivantes :
dans lequel le premier composant (170) et le second composant (180) forment au moins dans la zone du dispositif antirotation (126) une douille de goujon sensiblement fermée sur la périphérie ;
dans lequel le premier composant (170) est un premier composant moulé par injection et le second composant (180) est un second composant moulé par injection séparé, dans lequel le premier composant moulé par injection est surmoulé par injection au moins partiellement par le second composant moulé par injection ;
dans lequel le second composant (180) est réalisé en un autre matériau, en particulier en un matériau avec une résistance plus élevée et/ou avec un module d'élasticité supérieur, à un matériau du premier composant (170).

9. Goujon (100) selon l'une des revendications 1 à 8, présentant :
un pied (102) avec une ouverture (104) pour l'introduction d'un élément de fixation (106), dans lequel en particulier l'au moins un dispositif antirotation (126) est agencé au niveau du pied (102) ;
une tête (108) ; et
une zone d'écartement (110) entre le pied (102) et la tête (108) ;
dans lequel en particulier la zone d'écartement (110) est réalisée avec une pluralité de branches d'écartement (112, 114) reposant l'une contre l'autre à fleur dans le sens périphérique, mais séparées, dans lequel plus particulièrement les branches d'écartement (112, 114) présentent des premières branches d'écartement (112) et des secondes branches d'écartement (114), dans lequel les première branches d'écartement (112) sont reliées entre elles au niveau du pied (102) et/ou au niveau de la tête (108) et/ou dans lequel les secondes branches d'écartement (114) sont reliées entre elles au niveau du pied (102) et/ou au niveau de la tête (108).

10. Goujon (100) selon la revendication 9, présentant au moins une des caractéristiques suivantes :
dans lequel les premières branches d'écartement (112) ne sont pas reliées aux secondes branches d'écartement (114), en particulier pas au niveau de la tête (108) et/ou pas au niveau du pied (102) et/ou pas entre la tête (108) et le pied (102) ;
dans lequel les premières branches d'écartement (112) et les secondes branches d'écartement (114) sont fabriquées en différents matériaux ou en le même matériau ;
dans lequel les premières branches d'écartement (112) et les secondes branches d'écartement (114) sont agencées en alternance dans le sens périphérique ;
dans lequel les premières branches d'écartement (112) et les secondes branches d'écartement (114) sont réalisées à complémentarité de formes l'une par rapport à l'autre ;
dans lequel les premières branches d'écartement (112) sont réalisées plus minces et en un matériau plus résistant que les secondes branches d'écartement (114) ou les secondes branches d'écartement (114) sont réalisées plus minces et en un matériau plus résistant que les premières branches d'écartement (112) ;
dans lequel les premières branches d'écartement (112) font partie du premier composant (170), en particulier d'un premier composant moulé par injection, du goujon (100) et les secondes branches d'écartement (114) font partie du second composant (180), en particulier d'un second composant moulé par injection, du goujon (100) ;
dans lequel les premières branches d'écartement (112) et les secondes branches d'écartement (114) présentent une flexibilité ou élasticité différente ;
dans lequel les premières branches d'écartement (112) sont entourées sur la périphérie au moins par sections par une matrice (116) continue qui présente aussi les secondes branches d'écartement (114) ;
dans lequel les premières branches d'écartement (112) et les secondes branches d'écartement (114) sont engrenées entre elles ;
dans lequel au moins une partie des branches d'écartement (112, 114) présente dans le sens axial du goujon (100) en alternance des sections plus larges (140) et des sections plus étroites (142) ;
dans lequel la zone d'écartement (110) est fermée sans fente dans le sens périphérique, en particulier le long d'une longueur axiale entière de la zone d'écartement (110) ;
dans lequel les branches d'écartement (112, 114) sont réalisées afin de s'écarter ensemble lors de l'introduction d'un élément de fixation (106) dans le goujon (100) introduit dans un support (118) réalisé comme corps plein ;
dans lequel les branches d'écartement (112, 114) sont réalisées afin de se nouer entre elles lors de l'introduction d'un élément de fixation (106) dans le goujon (100) introduit dans un support (118) réalisé comme corps creux ;
dans lequel la tête (108) est fermée, dans lequel en particulier la tête (108) présente un point destiné à la rupture (120) qui peut être rompu lors de l'introduction d'un élément de fixation (106) dans le goujon (100) en ouvrant la tête (108) ;
dans lequel la tête (108) présente des joints de dilatation (122) qui sont remplis au moins partiellement de nervures (124), dans lequel en particulier au moins une partie des joints de dilatation (122) s'étend en biais par rapport à un sens axial du goujon (100) ;
dans lequel le pied (102) présente le dispositif antirotation (126), en particulier est réalisé comme éléments en porte-à-faux (128) agencés par répartition côté extérieur dans le sens périphérique ;
dans lequel au moins dans la zone d'écartement (110) un canal de réception (130) présente pour la réception d'un élément de fixation (106) à l'intérieur du goujon (100) plusieurs éléments en porte-à-faux (132) pénétrant côté intérieur qui sont réalisés comme zones d'extrémité côté intérieur d'au moins une partie des éléments d'écartement (112, 114) ;
dans lequel la tête (108) et/ou le pied (102) est ou sont réalisés de sorte qu'aucun écartement n'y soit effectué lors de l'introduction d'un élément de fixation (106) .

11. Kit de montage (134) présentant :
un goujon (100) selon l'une des revendications 1 à 10 ; et
un élément de fixation (106) lors de l'introduction dans le goujon (100).

12. Procédé de fabrication d'un goujon, dans lequel le procédé présente :
la formation d'un premier composant (170) avec un dispositif antirotation (126) logé de manière élastique ; et
la formation d'un second composant (180) agencé au niveau du premier composant (170), dans lequel le second composant (180) présente une fenêtre qui expose le dispositif antirotation (126) vers l'extérieur.

13. Procédé de montage d'un goujon (100) selon l'une des revendications 1 à 10 dans un support (118), dans lequel le procédé présente :
l'introduction du goujon (100) dans un trou foré dans le support (118), par quoi au moins un élément en porte-à-faux côté extérieur du dispositif antirotation (126) se déplace dans le sens radial vers l'intérieur.

14. Procédé selon la revendication 13, dans lequel le procédé présente :
l'introduction ensuite d'un élément de fixation (106) dans le goujon (100), par quoi l'au moins un élément en porte-à-faux côté extérieur du dispositif antirotation (126) se déplace dans le sens radial vers l'extérieur.
